# EUROPÄISCHE PATENTSCHRIFT

(11) **EP 1 901 874 B1**
(45) Veröffentlichungstag und Bekanntmachung des Hinweises auf die Patenterteilung: **13.12.2017**
(21) Anmeldenummer: 06741004.3
(22) Anmeldetag: 18.05.2006
(51) Int. Cl.: B23K 9/12

(54) **KALT-METALL-TRANSFER-SCHWEISSVERFAHREN SOWIE SCHWEISSANLAGE**
COLD METAL TRANSFER WELDING PROCESS AND WELDING INSTALLATION
PROCEDE DE SOUDAGE PAR TRANSFERT DE METAL A FROID ET DISPOSITIF DE SOUDAGE

(30) Priorität: 24.05.2005 AT 8832005
(43) Veröffentlichungstag der Anmeldung: 26.03.2008
(73) Patentinhaber: Fronius International GmbH, 4643 Pettenbach (AT)
(72) Erfinder: SCHÖRGHUBER, Manfred, A-4600 Wels (AT)
(74) Vertreter: Heger, Georg
(86) Internationale Anmeldenummer: PCT/AT2006/000205
(87) Internationale Veröffentlichungsnummer: WO 2006/125234

(56) Entgegenhaltungen:
- EP-A- 1 384 547
- WO-A-00/64620
- PATENT ABSTRACTS OF JAPAN Bd. 005, Nr. 053 (M-063), 14. April 1981 (1981-04-14) & JP 56 009062 A (MITSUBISHI ELECTRIC CORP), 29. Januar 1981 (1981-01-29)

## Beschreibung

Die Erfindung betrifft ein Kalt-Metall-Transfer-Schweißverfahren, im Folgenden CMT-Prozess genannt, bei dem der Schweißprozess durch zyklische Abwechslung einer Lichtbogenphase und einer Kurzschlussphase definiert ist, wobei während einer Lichtbogenphase ein Schweißdraht bis zur Berührung mit dem Werkstück in Richtung Werkstück bewegt wird, anschließend nach Bildung eines Kurzschlusses während der Kurzschlussphase die Drahtförderung umgekehrt und der Schweißdraht vom Werkstück wegbewegt wird, wobei der Schweißstrom und/oder die Schweißspannung während der Lichtbogenphase derart geregelt wird, dass der Schweißdraht angeschmolzen und ein Tropfen gebildet wird, und dass während der Kurzschlussphase ein Öffnen des Kurzschlusses über den Schweißstrom unterbunden wird, wobei zur Festlegung des Schweißprozesses Schweißparameter eingestellt werden.

Üblicherweise wird beim Kalt-Metall-Transfer-Schweißverfahren nach der Kurzschlussphase der Schweißdraht bis zum Öffnen des Kurzschlusses und/oder einem definierten Abstand vom Werkstück und/oder über eine definierte Zeitdauer vom Werkstück wegbewegt.

Weiters betrifft die Erfindung eine Schweißanlage mit einem Schweißgerät, zumindest einer Steuervorrichtung mit einem Speicher für Betriebsdaten bzw. Programme, einer Stromquelle, einem Drahtvorschubgerät zur Förderung eines Schweißdrahtes, einem am Schweißgerät anschließbaren Schweißbrenner und einer Ein- und/oder Ausgabevorrichtung mit zumindest zwei Steuerorganen zum Einstellen von Schweißparametern.

Aus der EP 1 384 546 A2 ist ein Verfahren zum Steuern einer Schweißstromquelle bekannt, bei dem die Wellenform des Schweißstromes zumindest einen Lichtbogen-Anteil und einen Kurzschluss-Anteil aufweist. Während des Schweißprozesses wird eine Kurzschlussphase durch Bewegung des Schweißdrahtes bis zur Berührung des Werkstücks eingeleitet und eine Lichtbogenphase durch Rückbewegung des Schweißdrahtes eingeleitet. Der Kurzschluss-Anteil des Schweißstroms wird während der Kurzschlussphase angelegt, bevor der Schweißdraht zur Bildung eines Lichtbogens vom Werkstück abgehoben wird. Der Kurzschluss-Anteil weist dabei das Strommaximum in einer Periode des Schweißstroms auf, sodass in der Kurzschlussphase ein hoher Strom über den Schweißdraht und das Werkstück fließt.

Der betragsmäßig niedrigere Lichtbogen-Anteil des Schweißstromes wird beim Zurückbewegen des Schweißdrahtes unter Bildung des Lichtbogens angelegt. Die Wellenform des Schweißstroms und die Rückbewegung des Schweißdrahtes, welche mehrere unterschiedliche Phasen aufweisen, sind entsprechend koordiniert. Nachteilig ist dabei, dass die Dauer der Lichtbogenphase und der Kurzschlussphase, welche einander periodisch abwechseln, nicht direkt am Schweißgerät, sondern nur indirekt über Schweißparameter, wie Schweißstrom, Drahtvorschubgeschwindigkeit, usw. eingestellt werden kann.

Aus der DE 197 38 785 A1 ist eine elektronische Schweißenergiequelle bekannt, mit der ein Schweißprozess durchgeführt werden kann, bei dem eine Lichtbogenphase und eine Kurzschlussphase zyklisch abgewechselt werden. Die neue Einstellung der Schweißparameter zur Festlegung des Schweißprozesses ist jedoch relativ aufwendig und erfordert meist entsprechendes Wissen der bedienenden Person.

Die US 2002/0153363 A1 beschreibt ein Schweißverfahren, bei dem die Abschmelzrate des Schweißdrahtes geregelt werden kann. Die Definition des Schweißprozesses erfordert jedoch auch hier, wie bei anderen Schweißprozessen des Standes der Technik, die Einstellung einer großen Anzahl von Schweißparametern am Schweißgerät und somit die entsprechende Kenntnis des Schweißers.

Die WO 00/64620 A1 sowie die EP 1 384 547 A zeigen Kalt-Metall-Transfer-Schweißverfahren der gegenständlichen Art, wo die Kurzschlussfrequenz geregelt bzw. festgelegt werden kann.

Die Aufgabe der vorliegenden Erfindung besteht in der Schaffung eines oben genannten Schweißverfahrens und einer Schweißanlage, mit welchen mit einer möglichst geringen Anzahl von Einstellungen am Schweißgerät das. komplexe Zusammenspiel der einzelnen Schweißparameter für optimale Schweißergebnisse und optimale Qualität der Schweißnaht genutzt werden kann. Unabhängig von den Prozesszuständen sollen gleichbleibende Ergebnisse erzielt werden.

Die Aufgabe der Erfindung wird in verfahrensmäßiger Hinsicht dadurch gelöst, dass als ein Schweißparameter über ein Steuerorgan eine Bewegungsfrequenz des Schweißdrahtes, mit welcher die Anzahl der Lichtbogenphasen und Kurzschlussphasen pro Sekunde definiert wird und zumindest ein weiterer Schweißparameter direkt eingestellt werden, und von einer Steuervorrichtung automatisch alle weiteren erforderlichen Schweißparameter zur Einhaltung der eingestellten Bewegungsfrequenz aufgrund von hinterlegten Werten bzw. durch entsprechende Berechnungsverfahren ermittelt und eingestellt und geregelt werden und die Länge des Lichtbogens zwischen dem Schweißdraht und dem Werkstück während der Lichtbogenphase überwacht wird und Änderungen der Lichtbogenlänge über die Schweißparameter, insbesondere die Drahtvorschubgeschwindigkeit und den Schweißstrom, derart geregelt werden, dass die Kurzschlussphase mit der eingestellten Bewegungsfrequenz eintritt. Die Bewegungsfrequenz gibt also die Anzahl der Perioden, welche jeweils aus einer Lichtbogenphase und einer Kurzschlussphase gebildet werden, pro Sekunde an. Der Benutzer stellt diese Bewegungsfrequenz und mindestens einen weiteren Schweißparameter ein, worauf aus diesen Angaben von der Steuervorrichtung automatisch alle weiteren erforderlichen Schweißparameter, wie Schweißstrom und Drahtvorschubgeschwindigkeit, ermittelt und eingestellt und geregelt werden, damit die eingestellte Bewegungsfrequenz während des Schweißverfahrens eingehalten wird. Für den Benutzer sind keine besonderen Schweißkenntnisse erforderlich. Damit wird auch eine sehr schnelle und bedienerfreundliche Einstellmöglichkeit geschaffen. Ebenso wird dadurch eine regelmäßige Einbringung des Zusatzmaterials ins Schmelzbad gewährleistet, wodurch eine definierte Schweißnaht und somit ein verbessertes Erscheinungsbild der Werkstückverbindung erreicht wird. Trotz Störungen während des Schweißprozesses, beispielsweise bei einer Lichtbogenlängenänderung, kann eine gleichbleibende Bewegungsfrequenz und damit eine konstante Schweißqualität, insbesondere eine konstante Schweißnahtbreite, erzielt werden. Wichtige Parameter sind weiter der Schweißstrom und die Drahtvorschubgeschwindigkeit. Durch die Regelung der Lichtbogenlänge während der Lichtbogenphase können Störungen an der Werkstückoberfläche, wie Vertiefungen oder Erhöhungen, erkannt und ausgeglichen werden, und ein frühzeitiges Einleiten der Kurzschlussphase vermieden werden. Über die Bewegungsfrequenz des Schweißdrahtes kann die Frequenz der Schmelzbadschwingung gezielt beeinflusst werden. Durch Auswahl einer geringen Bewegungsfrequenz kann in einfacher Weise die Eigenschwingung des Schmelzbades stark reduziert werden, wodurch Schweißspritzer vermieden werden können. Ebenso kann durch eine Erhöhung der Bewegungsfrequenz die Eigenschwingung des Schmelzbades und dadurch in vorteilhafter Weise die Spaltüberbrückung verbessert werden. Somit kann mit der Einstellung der Bewegungsfrequenz eine gezielte Anregung der Schwingung des Schmelzbades erzwungen werden.

Zusätzlich zur Bewegungsfrequenz können insbesondere die Materialstärke, der Durchmesser des Schweißdrahtes oder die Abschmelzrate eingestellt werden.

Vorteilhafterweise werden während der Lichtbogenphase über eine definierte Zeitdauer zur Bildung des Tropfens am Schweißdraht Schweißparameter, wie beispielsweise der Schweißstrom und/oder die Drahtvorschubgeschwindigkeit, derart geregelt, dass bei konstanter Drahtvorschubgeschwindigkeit ein konstanter Abstand des Schweißdrahtes zum Werkstück, welcher der Länge des Lichtbogens zwischen dem Schweißdraht und dem Werkstück entspricht, erzielt werden. Somit muss in einfacher Weise beispielsweise nur mehr der Schweißstrom entsprechend gesteuert und geregelt werden, da der Zeitpunkt des nächsten Kurzschlusses durch die eingestellte Bewegungsfrequenz bekannt ist und dieser somit in einfacher Weise von der Steuervorrichtung des Schweißgerätes eingeleitet werden kann.

Wenn während der Lichtbogenphase zur Einleitung der Kurzschlussphase der Schweißstrom abgesenkt wird, sodass der Tropfen des Schweißdrahtes ohne weiterem Anschmelzen des Schweißdrahtes in verflüssigtem Zustand gehalten wird, kann die Kurzschlussphase gezielt eingeleitet und können dadurch Schweißspritzer vermieden werden. Durch das bewusste Absenken des Schweißstromes vor der Einleitung der Kurzschlussphase wird der Lichtbogendruck reduziert, wodurch es beim Kontakt des Schweißdrahtes mit dem Werkstück zu keinem Abschleudern des Tropfens an verflüssigtem Material kommen kann und somit ein kontinuierlicher Übergang erreicht wird.

Wenn während der Lichtbogenphase zur Einleitung der Kurzschlussphase, insbesondere während oder nach dem Absenken des Schweißstromes, die Drahtvorschubgeschwindigkeit erhöht wird, um die Länge des Lichtbogens zwischen dem Schweißdraht und dem Werkstück bis zum Kurzschluss zu reduzieren, kann der Kurzschluss schneller erreicht und dadurch die Dauer zur Bildung des Kurzschlusses verringert werden. Dadurch kann die Zeitdauer für die Lichtbogenphase erhöht und somit mehr Zusatzmaterial aufgeschmolzen werden.

Während der Kurzschlussphase können die Schweißparameter zur Veränderung der Dauer der Kurzschlussphase geregelt werden, sodass die anschließende Lichtbogenphase mit der eingestellten Bewegungsfrequenz eintritt. Dadurch kann in vorteilhafter Weise die Temperatur des Schmelzbades und dadurch der Einbrand geregelt werden.

Wird zusätzlich zur Bewegungsfrequenz die Wärmeeinbringung in das Werkstück eingestellt, und das Verhältnis der Dauer der Kurzschlussphase zur Dauer der Lichtbogenphase und/oder ein Profil des Schweißstromes in Abhängigkeit der eingestellten Wärmeeinbringung festgelegt, kann beispielsweise der Verzug des Materials, welcher von der Wärmeeinbringung abhängt, verringert werden. Weiters können dadurch die Temperatur des Schmelzbads und der Einbrand eingestellt werden.

Vorteilhafterweise wird die Bewegungsfrequenz zwischen 1 Hz und 150 Hz, bevorzugt zwischen 30 Hz und 70 Hz, eingestellt. Dadurch wird eine besonders bedienerfreundliche Handhabung erreicht. Der Benutzer kann beispielsweise mit Hilfe von Tabellen rasch die für das jeweilige zu verarbeitende Werkstück optimale Bewegungsfrequenz herausfinden. Über die Bewegungsfrequenz kann auch das Aussehen der Schweißnaht beeinflusst werden.

Gemäß einem weiteren Merkmal der Erfindung ist vorgesehen, dass die Schweißparameter in Abhängigkeit eines definierten Profils der Länge des Lichtbogens bzw. der Schweißspannung ermittelt und eingestellt und geregelt werden. Dadurch kann beispielsweise eine höhere Abschmelzleistung erzielt werden.

Gelöst wird die erfindungsgemäße Aufgabe auch durch eine oben genannte Schweißanlage, bei der an der Ein- und/oder Ausgabevorrichtung ein Steuerorgan zum direkten Einstellen einer Bewegungsfrequenz, mit welcher die Anzahl der Lichtbogenphasen und Kurzschlussphasen pro Sekunde definiert wird, angeordnet ist, an der Ein- und/oder Ausgabevorrichtung ein weiteres Steuerorgan zum Einstellen eines weiteren Schweißparameters angeordnet ist, und die Steuervorrichtung zur automatischen Ermittlung und Einstellung und Regelung aller weiteren erforderlichen Schweißparameter aufgrund von hinterlegten Werten bzw. durch entsprechende Berechnungsverfahren zur Einhaltung der eingestellten Bewegungsfrequenz ausgebildet ist. Durch das Steuerorgan zum direkten Einstellen der Bewegungsfrequenz für den CMT-Prozess können automatisch viele der restlichen, erforderlichen Schweißparameter ermittelt und eingestellt und geregelt werden.

Das Steuerorgan zum Einstellen der Bewegungsfrequenz kann als Drehknopf ausgebildet sein. Neben oder auf dem Drehknopf kann eine beispielsweise von 1 bis 150 Hz reichende Skala angeordnet sein, wodurch auf einfache Weise die Einstellung ermöglicht wird bzw. Änderungen vorgenommen werden können. Durch entsprechende Gestaltung der Form und Größe des Drehknopfes kann eine einfache Bedienung auch dann ermöglicht werden, wenn der Schweißer Schweißhandschuhe trägt.

Ein Steuerorgan kann auch zum Einstellen des Materials und der Materialdicke als Drehknopf ausgebildet sein, allenfalls mit einer neben oder auf dem Drehknopf angeordneten und dem Material und der Materialdicke zugeordneten Skala. In vorteilhafter Weise werden mittels einer Position des Drehknopfes zwei Schweißparameter eingestellt.

An der Ein- und/oder Ausgabevorrichtung kann auch ein Steuerorgan zum Einstellen eines Wertes für die Wärmeeinbringung ins Werkstück angeordnet sein, wodurch in einfacher Weise die Wärmeeinbringung ins Werkstück und die damit verbundene Temperatur des Schmelzbads eingestellt werden kann.

Das Steuerorgan zum Einstellen des Wertes für die Wärmeeinbringung ins Werkstück kann als Drehknopf ausgebildet sein, allenfalls mit einer neben oder auf dem Drehknopf angeordneten und der Wärmeeinbringung zugeordneten Skala, welche beispielsweise von 1 bis 100 reicht.

Zumindest ein Steuerorgan kann auch durch eine Anzeige mit einem Eingabefeld, insbesondere einen Touch-Screen gebildet sein. Dabei ist das Steuerorgan zum Einstellen der Bewegungsfrequenz, zumindest eines weiteren Schweißparameters und des Wertes für die Wärmeeinbringung vollständig oder teilweise softwaremäßig, und/oder mit Grafikunterstützung, über ein Eingabefeld ausgebildet. Dadurch kann auch ein exakter Wert für den entsprechenden Schweißparameter eingestellt werden.

Vorteilhafterweise ist auch ein Fernregeler zur Einstellung der Schweißparameter, insbesondere der Bewegungsfrequenz, und des Wertes für die Wärmeeinbringung, am Schweißbrenner angeordnet. Dadurch können auch während dem Schweißprozess die entsprechenden Schweißparameter geändert werden.

Die vorliegende Erfindung wird anhand der beigefügten Zeichnungen näher erläutert.

Darin zeigen:
- Fig. 1: eine exemplarische Darstellung eines Schweißgeräts;
- Fig. 2: bis 7 die zeitlichen Verläufe der Schweißspannung, des Schweißstromes und der Drahtvorschubgeschwindigkeit und ein Bewegungsdiagramm für den Schweißdraht unter Einhaltung einer bestimmten Bewegungsfrequenz anhand verschiedener Beispiele erfindungsgemäßer Schweißverfahren;
- Fig. 8: unterschiedliche Einstellungen für die Wärmeeinbringung ins Werkstück innerhalb einer vorgegebenen Periodendauer während eines erfindungsgemäßen Schweißverfahrens;
- Fig. 9: die Regelung der Wärmeeinbringung entsprechend dem Material des Werkstücks innerhalb einer vorgegebenen Periodendauer während eines erfindungsgemäßen Schweißverfahrens;
- Fig. 10: und 11 die zeitlichen Verläufe der Schweißspannung, des Schweißstromes und der Drahtvorschubgeschwindigkeit und ein Bewegungsdiagramm für den Schweißdraht anhand eines undefinierten Kurzschlusses sowie anhand einer verlängerten Kurzschlussphase während erfindungsgemäßer Schweißverfahren; und
- Fig. 12: und 13 Ausführungsbeispiele einer Ein- und/oder Ausgabevorrichtung einer erfindungsgemäßen Schweißanlage.

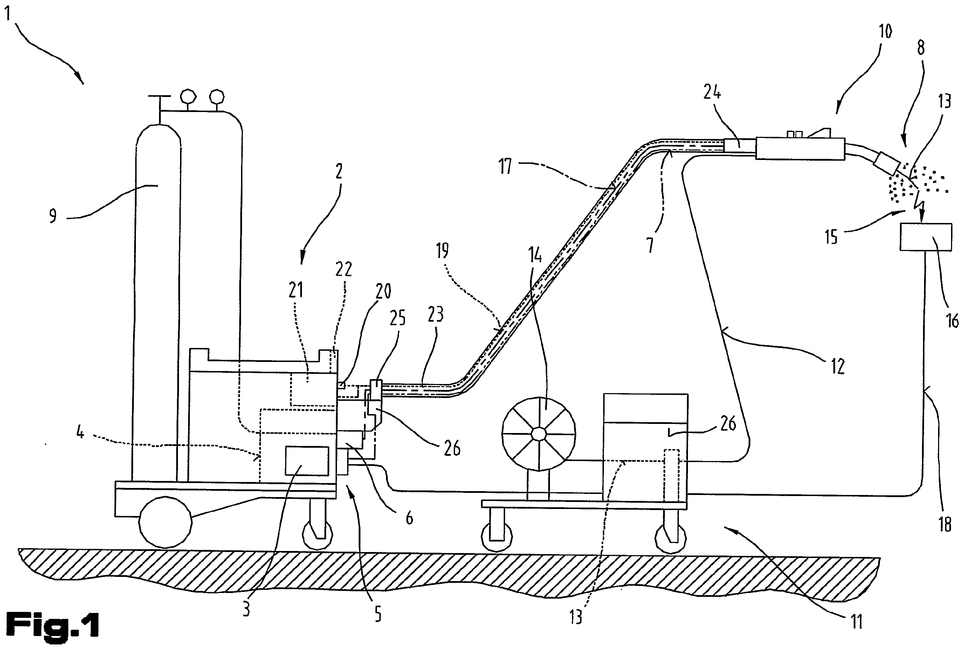

In Fig. 1 ist ein Schweißgerät 1 für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dergl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der nicht abschmelzenden Elektrode, nicht dargestellt, und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

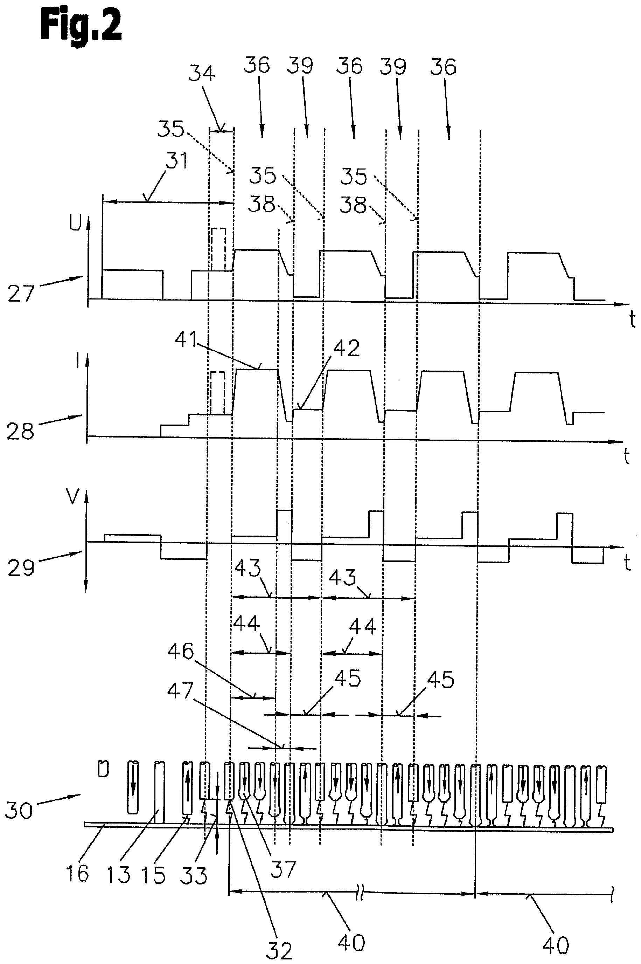

In Figur 2 ist ein Ausführungsbeispiel eines erfindungsgemäßen Schweißprozesses anhand der Diagramme 27 bis 30, welche die zeitlichen Verläufe der Schweißspannung U, des Schweißstroms I, der Drahtvorschubgeschwindigkeit V und der Bewegungen bzw. Stellungen des austrittsseitigen Endes des Schweißdrahtes 13 relativ zum Werkstück 16 schematisch dargestellt.

Beim dargestellten Schweißverfahren zum Steuern und/oder Regeln des Schweißgerätes 1 bzw. der Schweißstromquelle, wird eine abschmelzende Elektrode bzw. ein Schweißdraht 13 eingesetzt. Dabei erfolgt die Aufschmelzung des Werkstückes 16 und des Schweißdrahtes 13 über die ionisierte Plasmasäule bzw. den Lichtbogen 15, der zwischen dem Schweißdraht 13 und dem elektrischen Gegenpol am Werkstück 16 aufgebaut wird.

Das Zünden des Lichtbogens 15 kann über ein beliebiges Verfahren erfolgen, beispielsweise in Art des aus dem Stand der Technik bekannten "Lift-Arc-Prinzips", bei dem während einer Zündphase 31 eine Leerlaufspannung an den Schweißdraht 13 angelegt wird. Anschließend wird der Schweißdraht 13 bis zur Kontaktierung des Werkstücks 16 in Richtung Werkstück 16 gefördert, worauf der entstehende Kurzschluss in einer Kurzschlussphase durch Umkehr der Förderrichtung des Schweißdrahtes 13 aufgebrochen wird. Dadurch erfolgt die Bildung des Lichtbogens 15, wobei die Rückförderung des Schweißdrahtes 13 vom Werkstück 16 bis an einen oberen Totpunkt 32 zum Erreichen eines definierten Abstands 33 und/oder nach einer definierten Zeitdauer erfolgt. Der Strom ist in der Zündphase 31 in einer oder mehreren Stufe(n) derart begrenzt, dass ein Schmelzen des Schweißdrahtes 13 nicht erfolgen kann.

Die Erstzündung des Lichtbogens 15 kann bei der sogenannten Hochfrequenzzündung auch über ein hochfrequentes Spannungssignal erfolgen (nicht dargestellt).

Nach dem Zünden des Lichtbogens 15 bzw. Erreichen des Abstandes 33 ist es auch möglich, dass vor dem eigentlichen Schweißprozess eine erste kurze Stabilisierungsphase 34 mit erhöhter Wärmeeinbringung (wie mit strichlierten Linien dargestellt) über eine definierte Zeitdauer und anschließend der durch zyklisch wiederkehrende Schweißprozessphasen aufgebaute Schweißprozess durchgeführt wird. Dies hat den Vorteil, dass durch diese kurze Stabilisierungsphase 34 mit hoher Wärmeeinbringung eine Stabilisierung des Lichtbogens 15 und/oder eine Erwärmung des Werkstückes 16 bzw. Schmelzbades geschaffen wird. Des Weiteren wird der Schweißdraht 13 durch die Stabilisierungsphase 34 erwärmt und dadurch kann der nachfolgende Schweißprozess mit vorerwärmtem Schweißdraht 13 beginnen, wodurch die Schweißqualität wesentlich verbessert wird.

Nach der Zündphase 31 und der allfälligen Stabilisierungsphase 34 erfolgt zum Zeitpunkt 35 der eigentliche Schweißprozess, wobei erfindungsgemäß ein Kalt-Metall-Transfer-Schweißprozess, im Folgenden CMT-Prozess genannt, durchgeführt wird. Beim CMT-Prozess wird der Schweißdraht 13 in der hierin als Lichtbogenphase 36 bezeichneten Prozessphase bis zur Berührung mit dem Werkstück 16 nach vor gefördert. In der Lichtbogenphase 36 erfolgt ein Anschmelzen des Schweißdrahts 13, sodass am Schweißdrahtende eine Tropfenbildung, also ein Tropfen 37, entsteht. Hierbei wird der Schweißstrom und/oder die Schweißspannung in der Lichtbogenphase 36 derart geregelt, dass keine Tropfenablösung erfolgt und zum Zeitpunkt 38 ein Kurzschluss eintritt, welcher die Kurzschlussphase 39 einleitet. In der Kurzschlussphase 39 wird die Drahtförderung umgekehrt, sodass der Schweißdraht 13 bis zum Öffnen des Kurzschlusses, d.h. der Bildung des Lichtbogens 15, und/oder dem definierten Abstand 33 und/oder eine definierte Zeitdauer vom Werkstück 16 zurückgefördert wird. Dadurch tritt zum Zeitpunkt 35 erneut die Lichtbogenphase 36 ein, worauf die Bewegungsrichtung des Schweißdrahts 13 an einem oberen Totpunkt 32 erneut umgekehrt wird und der Schweißdraht 13 in Richtung des Werkstücks 16 bewegt wird.

Der Schweißdraht 13 führt also während des Schweißprozesses eine abwechselnde Bewegung in Richtung des Werkstückes 16 und vom Werkstück 16 weg durch. Das Drahtvorschubgerät 11 wird im Wesentlichen so gesteuert, dass ein negatives Signal bzw. eine Rückwärtsförderung des Schweißdrahtes 13 während der Kurzschlussphase 39 erfolgt, und anschließend ein Lichtbogen 15 aufgebaut wird, und ein positives Signal bzw. eine Vorwärtsförderung des Schweißdrahtes 13 in Richtung des Werkstücks 16 während der Lichtbogenphase 36 erfolgt, in der das Erhitzen bzw. Anschmelzen des Schweißdrahtes 13 zur Tropfenbildung erfolgt. Die Steuerung der Bewegungsrichtung des Schweißdrahtes 13 muss jedoch nicht unbedingt mit dem Auftreten der Lichtbogenphase 36 bzw. der Kurzschlussphase 39 korrelieren, da die Lichtbogenphase 36 durch eine gezielte Wärmeeinbringung über die Regelung des Stromniveaus im Schweißkreis beispielsweise bereits während der Rückwärtsbewegung des Schweißdrahtes 13 erfolgen kann. Es kann also auch bei bereits vorhandenem Lichtbogen 15 der Schweißdraht 13 weiterhin bis zu einem definierten Zeitpunkt bzw. Abstand vom Werkstück 16 weggefördert werden.

Die Tropfenablöse erfolgt derart, dass nach Erreichen des Totpunktes 32 eine Vorwärtsbewegung des Schweißdrahtes 13 bis zur Berührung mit dem Werkstück 16 erfolgt. Durch die Oberflächenspannung des Tropfens 37 am Schweißdraht 13 und im Schmelzbad und weiterer bekannter wirkender physikalischer Effekte wird dieser vom Schweißdraht 13 gelöst. Durch die Rückwärtsbewegung des Schweißdrahtes 13 wird das Wiederzünden des Lichtbogens 13 begünstigt. Zur Unterstützung der Tropfenablöse kann eine Erhöhung, insbesondere eine impulsartige Erhöhung des Schweißstromes I während der Kurzschlussphase 39 (nicht dargestellt) durchgeführt werden. Für die Dauer des CMT-Prozesses wechseln einander die Lichtbogenphase 36 und die Kurzschlussphase 39 im gezeigten Ausführungsbeispiel periodisch ab.

Auf weitere, verfahrenstechnische Details des CMT-Prozesses wird an dieser Stelle nicht eingegangen, da dieser für Schweißprozesse mit konstanter und wechselnder Polarität des Schweißstromes am Schweißdraht 13 bzw. dem Werkstück 16 bereits aus dem Stand der Technik bekannt ist.

Erfindungsgemäß ist zur Erweiterung der Eingriffsmöglichkeiten in den Schweißprozess nun vorgesehen, dass eine Bewegungsfrequenz 40, vorzugsweise im Bereich zwischen 1 Hz und 150 Hz, insbesondere zwischen 30 Hz und 70 Hz, mit welcher die Kurzschlussphasen 39 und Lichtbogenphasen 36 auftreten und zumindest ein weiterer Schweißparameter, wie beispielsweise die Materialstärke, am Schweißgerät 1 eingestellt wird, wodurch die Anzahl der Kurzschlüsse bzw. Kurzschlussphasen 39, pro Sekunde definiert ist. Damit kann die Dauer der periodischen Lichtbogenphasen 36 und Kurzschlussphasen 39 aufgrund der eingestellten Bewegungsfrequenz 40 definiert werden. Bei den nachfolgend angeführten Ausführungsbeispielen wurde die der Bewegungsfrequenz 40 entsprechende Periodendauer schematisch eingezeichnet.

Die Spannung U bzw. der Strom I wird nach dem Überschreiten des Zeitpunkts 35 auf ein erstes Niveau angehoben. Gegebenenfalls kann dieses Niveau als Arbeitsniveau festgelegt werden, das während der gesamten Lichtbogenphase 36 und der Kurschlussphase 39 konstant gehalten wird bzw. nach einem Schweißprozessprofil verläuft. Gemäß Diagramm 28 weist der Schweißstrom I einen ersten Anteil, den Arbeitsstrom 41, und zumindest einen weiteren Anteil, den Grundstrom 42, welcher ein sicheres Wiederzünden des Lichtbogens 15 gewährleistet, auf. Der Grundstrom 42 ist gegenüber dem Arbeitsstrom 41 bevorzugt verhältnismäßig klein, wobei die Stromstärke des Arbeitsstroms 41 beispielsweise um das 1,5 bis 10-fache, insbesondere das 4 bis 8-fache, höher als die Stromstärke des Grundstroms 42 sein kann. Der Grundstrom 42 kann beispielsweise 5 A bis 50 A, insbesondere ca. 10 bis 30 A, betragen, wogegen der Arbeitsstrom 41 beispielsweise 50 A bis 500 A betragen kann.

Erfindungsgemäß ist die Anzahl der Kurzschlüsse pro Sekunde durch die eingestellte Bewegungsfrequenz 40 definiert. Eine Bewegungsfrequenz 40 von beispielsweise 50 Hz entspricht daher 50 Kurzschlüssen pro Sekunde. Dadurch kann eine Periodendauer 43 ermittelt werden, die anschließend von der Steuervorrichtung 4 aufgrund von hinterlegten Werten bzw. durch ein hinterlegtes Berechnungsmodul auf eine Zeitdauer 44 für die Lichtbogenphase 36 und eine Zeitdauer 45 für die Kurzschlussphase 39 aufgeteilt wird. Die Zeitdauer 44 und die Zeitdauer 45 können annähernd konstant gehalten werden. Während des Schweißprozesses kann die Zeitdauer 44 und 45 aufgrund der tatsächlichen Schweißprozesszustände entsprechend nachgeregelt werden, sodass immer die entsprechende Anzahl von Kurzschlüssen innerhalb einer Sekunde oder entsprechend zum definierten Zeitpunkt 38 innerhalb der Periodendauer 43 ein Kurzschluss erreicht wird.

Um einen Schweißprozess durchführen zu können, muss der Benutzer zusätzlich zu der Bewegungsfrequenz 40 zumindest einen weiteren Schweißparameter einstellen, sodass aufgrund dieser zumindest zwei Parameter die Steuervorrichtung 4 die restlichen weiteren erforderlichen Schweißparameter, wie beispielsweise den Schweißstrom I, die Drahtvorschubgeschwindigkeit V, usw. ermitteln kann und den Schweißprozess derart regeln bzw. steuern kann, dass die Kurzschlüsse bzw. die Kurzschlussphasen 39 entsprechend der eingestellten Bewegungsfrequenz 40 erreicht werden. Beispielsweise ist es möglich, dass der Benutzer zur Bewegungsfrequenz 40 das Material des zu verarbeitenden Werkstücks 16 und/oder dessen Materialdicke einstellt.

Beim Beispiel gemäß Fig. 2 wird während der Lichtbogenphase 36 der Abstand'33 des Schweißdrahtes 13 zum Werkstück 16 bzw. die Länge des Lichtbogens 15 konstant gehalten, sodass während der Lichtbogenphase 36, insbesondere zumindest über einen Großteil der Zeitdauer 44 für die Lichtbogenphase 36, die Drahtvorschubgeschwindigkeit V an die Abschmelzrate des Schweißdrahtes 13 zur Bildung des Tropfens angepasst ist. Hierzu wird bevorzugt eine konstante Drahtvorschubgeschwindigkeit V gewählt und der Schweißstrom I entsprechend geregelt, sodass sich eine konstante Länge des Lichtbogens 15 bzw. ein konstanter Abstand 33 des Schweißdrahtes 13 zum Werkstück 16 ergibt. Selbstverständlich kann auch ein anderer Parameter, insbesondere der Schweißstrom I, als Konstante herangezogen und können die weiteren Parameter geregelt werden. Somit ergibt sich eine Zeitdauer 46, welche ein Teil der Zeitdauer 44 der Lichtbogenphase 36 ist, über die eine Anschmelzung des Schweißdrahtes 13 erfolgt und der Abstand 33 konstant gehalten wird. Dadurch werden die Schweißparameter, insbesondere der Arbeitsstrom 41 und/oder die Drahtvorschubgeschwindigkeit V, von der Steuervorrichtung 4 entsprechend geregelt. Die Regelung des Arbeitsstromes 41 und der Drahtvorschubgeschwindigkeit V erfolgt dadurch, dass der Arbeitsstrom 41 an die Größe des Tropfens 37 bzw. die Zusatzmaterialmenge an die zusätzlich zur Bewegungsfrequenz 40 eingestellten Parameter, insbesondere die Materialstärke, angepasst bzw. geregelt wird, wobei die Drahtvorschubgeschwindigkeit V während der Zeitdauer 46 auf einem gewissen Wert, welcher der Abschmelzrate des Schweißdrahtes 13 angepasst ist, konstant gehalten wird. Somit ist keine ständige Nachregelung der Schweißparameter in der Zeitdauer 44 erforderlich, wodurch die Regelung bzw. Steuerung einfach gehalten wird bzw. die Auslastung der Steuervorrichtung, insbesondere die Mikroprozessorauslastung reduziert wird. Weiters resultiert durch die periodisch konstante Periodendauer 43, in welcher ebenso die Wärmeeinbringung konstant ist, eine konstante Zusatzmaterialeinbringung, wodurch eine verbesserte Optik durch das definierte Aussehen der Schweißnaht erreicht wird. Am Ende der Zeitdauer 46 erfolgt zur definierten Einleitung des Kurzschlusses innerhalb einer Zeitdauer 47 in der Lichtbogenphase 36 bevorzugt eine Erhöhung der Drahtvorschubgeschwindigkeit V, wie dies im Diagramm 29 schematisch dargestellt ist. Dadurch wird der Abstand 33 zum Werkstück 16 dementsprechend verringert, bis ein Kurzschluss eintritt. Bevorzugt wird gleichzeitig mit der Erhöhung der Drahtvorschubgeschwindigkeit V der Schweißstrom I bzw. der Arbeitsstrom 41 auf einen geringen Wert abgesenkt bzw. auf Null reduziert, um den während der Zeitdauer 46 gebildeten Tropfen am Schweißdraht 13 zu halten und nicht unkontrolliert ins Schmelzbad überzuleiten. Dadurch wird der Lichtbogendruck beim immer geringer werdenden Abstand 33 zwischen Elektrode bzw. Schweißdraht 13 und Werkstück 16 auf ein Minimum reduziert. Dies bewirkt in vorteilhafter Weise, dass es beim Kontakt des Schweißdrahtes 13 mit dem Werkstück 16 zu keinem Abschleudern des Tropfens 37 bzw. verflüssigten Materials kommen kann, wodurch ein kontinuierlicher Übergang von der Lichtbogenphase 36 in die Kurzschlussphase 39 und eine starke Reduzierung, bis hin zu einer Vermeidung, der Schweißspritzer erreicht wird. Die Erhöhung der Drahtvorschubgeschwindigkeit V und die Absenkung des Arbeitsstromes 41 bewirkt, dass der Kurzschluss exakt zum Zeitpunkt 38, also am Ende der Lichtbogenphase 36, welcher durch die eingestellte Bewegungsfrequenz 40 definiert ist, eintritt. Zur Einleitung des Kurzschlusses während der Zeitdauer 47 ist es aber auch möglich, dass die Drahtvorschubgeschwindigkeit V der Lichtbogenphase 36 innerhalb der Zeitdauer 46 beibehalten wird, und nur der Schweißstrom I bzw. Arbeitsstrom 41 abgesenkt wird. Damit wird jedoch eine längere Zeitdauer 47 zur Bildung des Kurzschlusses benötigt. Dieses Vorgehen wird meist nur dann eingesetzt, wenn eine sehr geringe Bewegungsfrequenz 40 eingestellt wird bzw. weniger Material abgeschmolzen werden soll, sodass die Zeitdauer 46 verringert werden kann.

Nach der Bildung des Kurzschlusses zum Zeitpunkt 38 wird durch eine Rückwärtsbewegung des Schweißdrahtes 13, also der Kurzschlussphase 39, der Kurzschluss zum Zeitpunkt 35 geöffnet. Damit ist eine Periode mit der Periodendauer 43 beendet. Durch eine neuerliche Zündung des Lichtbogens 15 beim Abheben des Schweißdrahtes 13 vom Werkstück 16 wird eine neue Periode mit der Periodendauer 43 eingeleitet.

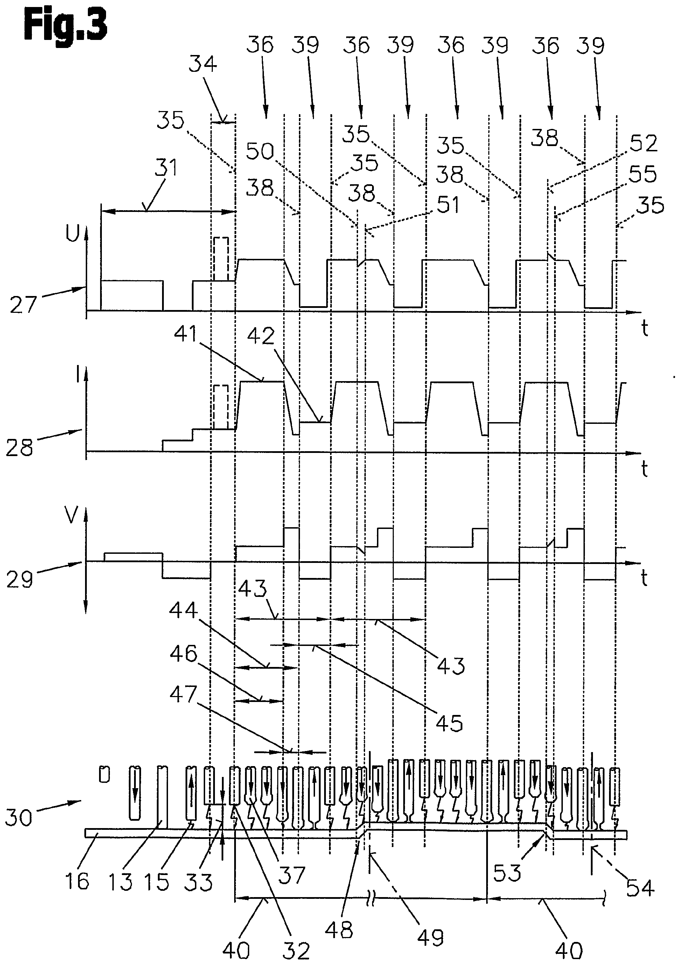

In Fig. 3 ist eine weitere Verfahrensvariante dargestellt, bei der die Länge des Lichtbogens 15 im Verhältnis zum Abstand 33 überwacht wird. Durch die Überwachung der Länge des Lichtbogens 15, beispielsweise durch Auswertung der bekannten Schweißparameter Schweißstrom I und Schweißspannung U durch die Steuervorrichtung 4, können Unregelmäßigkeiten an der Oberfläche des Werkstücks 16 erkannt werden. Durch eine Regelung der Schweißparameter, wie Schweißstrom I oder Drahtvorschubgeschwindigkeit V, kann ein undefinierter Kurzschluss, vor oder nach dem Zeitpunkt 38, vermieden werden.

Eine Erhebung 48 an der Oberfläche des Werkstücks 16 bzw. bei einem profilierten Werkstück 16 würde zum Zeitpunkt 49, bei keiner Gegenreaktion der Steuervorrichtung 4, einen frühzeitigen, undefinierten Kurzschluss bewirken. Hierbei würde sich der Abstand 33 bzw. die Lichtbogenlänge durch die Erhebung 48 verkürzen und somit die Zeitdauer 47, während welcher der Schweißdraht 13 zum Werkstück 16 gefördert wird, unvorhergesehen verkürzen. Durch die kontinuierliche Überwachung der Länge des Lichtbogens 15 wird erkannt, dass der Lichtbogen 15 ab dem Zeitpunkt 50 eine ungewollt verkürzte Länge, als dies von der Steuervorrichtung 4 erwartet, aufweist. Wird von der Steuervorrichtung 4 oder einer anderen Regelvorrichtung jedoch die Erhebung 48 erkannt, wie dies zum Zeitpunkt 50 der Fall ist, so kann nunmehr eine Gegenreaktion eingeleitet und der definierte Abstand 33 wieder hergestellt werden. Hierzu wird beispielsweise die Drahtvorschubgeschwindigkeit V solange verringert, bis die definierte Länge des Lichtbogens 15 wieder erreicht ist (Zeitpunkt 51). Anschließend bzw. zum Zeitpunkt 51 wird die Drahtvorschubgeschwindigkeit V wieder auf den ursprünglichen, von der Steuervorrichtung 4 vorgegebenen, konstanten Wert angehoben. Damit wird die Kurzschlussphase 39 zum richtigen Zeitpunkt 38 eingeleitet und die durch die Bewegungsfrequenz 40 definierte Periodendauer 43 eingehalten.

Umgekehrt ist es auch möglich, wie zum Zeitpunkt 52 ersichtlich, dass durch die Überwachung der Länge des Lichtbogens 15 eine Vertiefung 53 an der Oberfläche im Werkstück 16 bzw. eines profilierten Werkstücks 16 über die Verlängerung des Lichtbogens 15 erkannt wird. Hierbei würde bei keiner Gegenreaktion der Steuervorrichtung 4 der Kurzschluss zu einem späteren Zeitpunkt 54, als zu dem gemäß der eingestellten Bewegungsfrequenz 40 definierten Zeitpunkt 38 eintreten. Um dies zu vermeiden, wird bei Erkennung der Vertiefung 53 die Drahtvorschubgeschwindigkeit V erhöht, bis die definierte Länge des Lichtbogens 15 bzw. der Abstand 33 wieder erreicht ist (Zeitpunkt 55). Anschließend bzw. zum Zeitpunkt 55 wird die Drahtvorschubgeschwindigkeit V wieder auf den ursprünglichen, von der Steuervorrichtung 4 vorgegebenen, konstanten Wert abgesenkt und bis zur Einleitung des Kurzschlusses konstant gehalten.

Durch diese Maßnahmen wird gewährleistet, dass aufgrund der Nachregelung der Lichtbogenlänge während der Lichtbogenphase 36 der Kurzschluss zum vorgegebenen Zeitpunkt 38 eintritt und somit die eingestellte Bewegungsfrequenz 40 eingehalten wird.

Anstelle oder zusätzlich zur Schweißdrahtförderung kann die Lichtbogenlängenkorrektur auch über den Schweißbrenner durchgeführt werden, indem nach der Erkennung einer Erhebung 48 am Werkstück 16 der Schweißbrenner 10 vom Werkstück 16 wegbewegt wird und somit wiederum die gewünschte Länge des Lichtbogens 15 hergestellt wird.

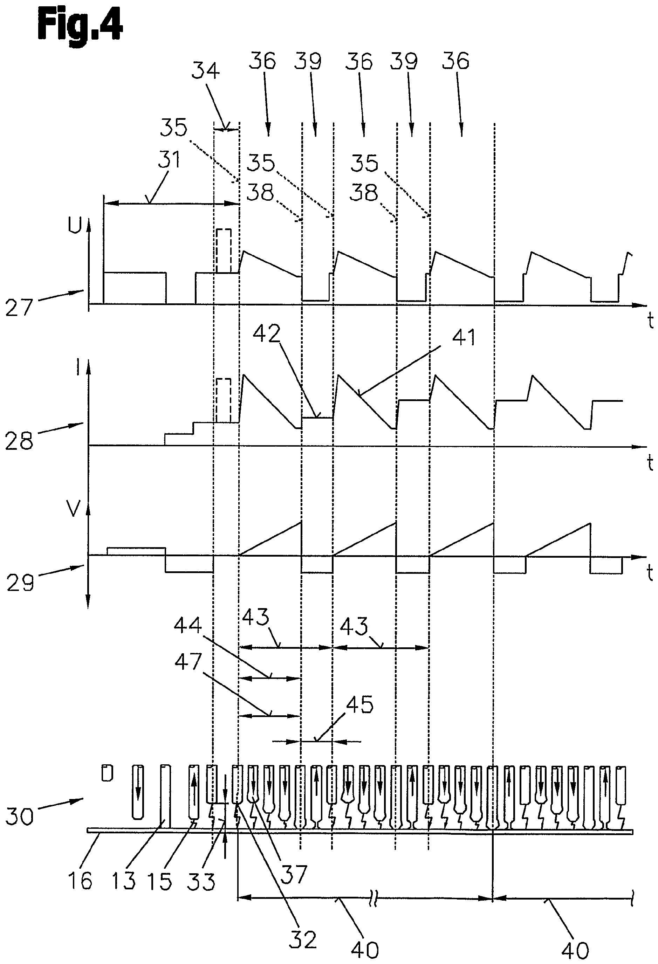

Eine derartige Lichtbogenlängenüberwachung kann auch bei anderen Ausführungsbeispielen, wie beispielsweise in Fig. 2 oder den nachfolgenden Figuren 4 bis 11, zusätzlich durchgeführt werden.

In den Fig. 4 bis 7 sind Ausführungsbeispiele des CMT-Prozesses mit veränderlichen Schweißparametern unter Berücksichtigung der vorgegebenen Bewegungsfrequenz 40 gezeigt. Durch den Einsatz einer Lichtbogenlängenüberwachung ist es auch möglich, dass die Schweißparameter während der Lichtbogenphase 36, zur Erzielung der Bewegungsfrequenz 40, nicht konstant gehalten werden, sondern beispielsweise einen steigenden oder fallenden Verlauf, entsprechend eines vorgegebenen Profils, aufweisen können. Dabei kann sich während der Lichtbogenphase 36 auch die Länge des Lichtbogens 15 bzw. der Abstand 33 vom Ende des Schweißdrahts 13 zum Werkstück 16 verändern. Entsprechend Fig. 4 wird zum Unterschied zu den zuvor beschriebenen Figuren während der Lichtbogenphase 36 die Drahtvorschubgeschwindigkeit V nach einer steigenden Rampenfunktion bzw. anhand einer steigenden Profil-Regelung bis zum Erreichen des Kurzschlusses zum Zeitpunkt 38 erhöht, wodurch sich das Ende des Schweißdrahtes 13 kontinuierlich zum Werkstück 16 bewegt. Gleichzeitig mit der steigenden Drahtvorschubgeschwindigkeit V fällt in der Lichtbogenphase 36 der Schweißstrom I bzw. Arbeitsstrom 41 nach einer sinkenden Rampenfunktion bzw. anhand einer sinkenden Profil-Regelung auf einen geringen Wert bzw. auf Null, bis der Kurzschluss zum Zeitpunkt 38 eintritt. Die Einleitung des Kurzschlusses entsprechend der Zeitdauer 47 erfolgt bereits zu Beginn der Lichtbogenphase 36, da die Zeitdauer 46, während welcher der Abstand 33 konstant gehalten wird, durch die kontinuierliche Annäherung des Schweißdrahtes 13 an das Werkstück 16 wegfällt. Daraus resultiert, dass die Zeitdauer 44 der Lichtbogenphase 36 in der Periodendauer 43 mit der Zeitdauer 47 identisch ist.

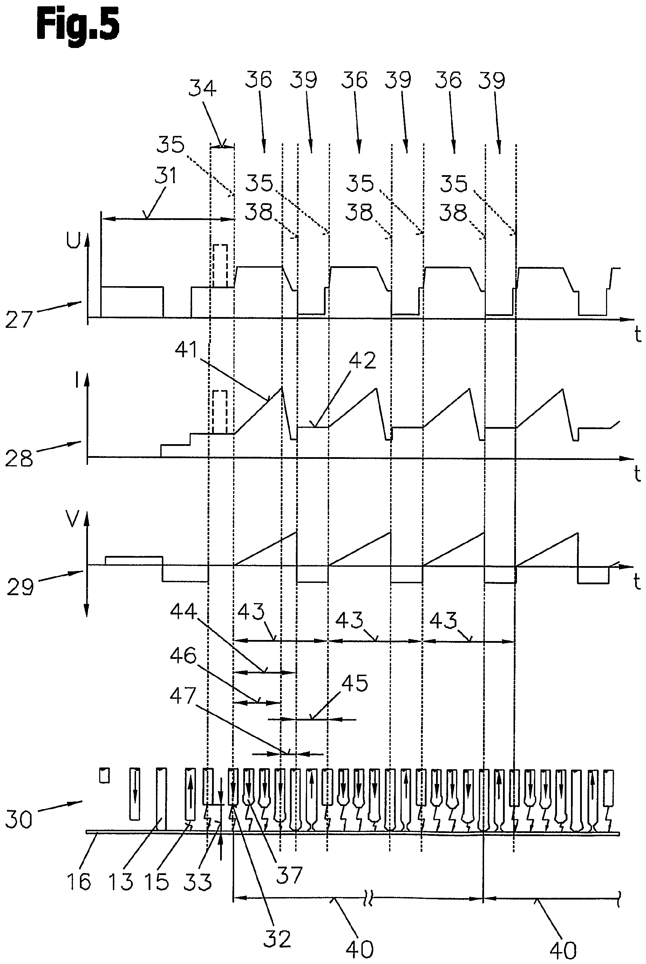

Ebenso kann entsprechend Fig. 5 der Arbeitsstrom 41 während der Lichtbogenphase 36 nach einer steigenden Rampenfunktion bzw. anhand einer steigenden Profil-Regelung während der Zeitdauer 46 verlaufen und zur Einleitung des Kurzschlusses während der Zeitdauer 47 auf einen geringen Wert bzw. auf Null abgesenkt werden. Hierzu wird die Drahtvorschubgeschwindigkeit V ebenfalls nach einer steigenden Rampenfunktion bzw. anhand einer steigenden Profil-Regelung bis zum Erreichen des Kurzschlusses zum Zeitpunkt 38 erhöht. Dadurch wird der Abstand 33 während der Zeitdauer 46 bis zur Einleitung des Kurzschlusses annähernd konstant gehalten, da die steigende Drahtvorschubgeschwindigkeit V durch die höhere Abschmelzrate des Schweißdrahtes 13, aufgrund des steigenden Arbeitsstromes 41, ausgeglichen wird.

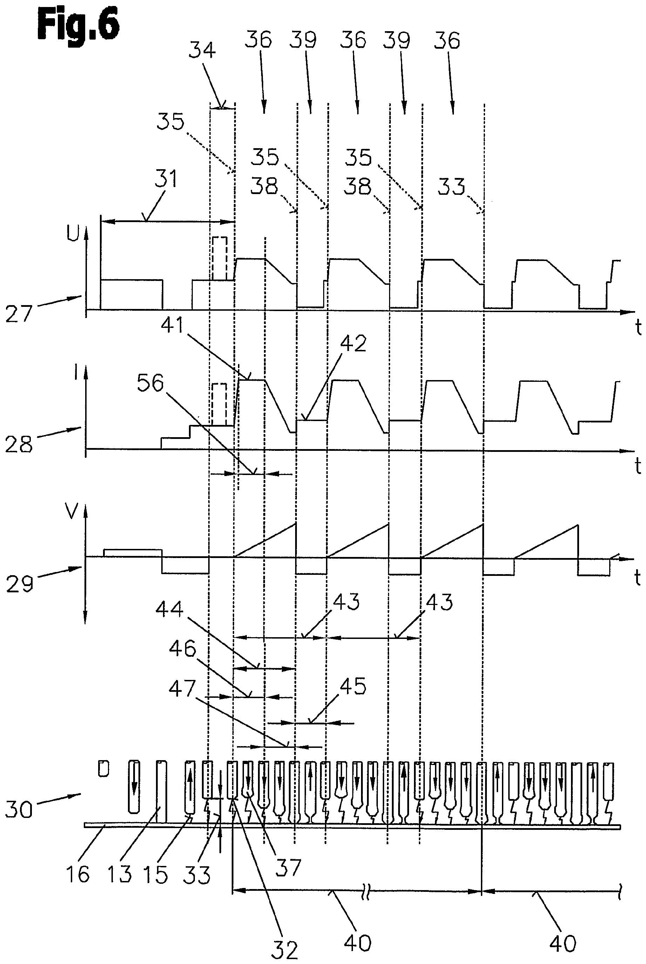

Gemäß Fig. 6 kann der Schweißstrom I auf dem Niveau des Arbeitsstromes 41 eine gewisse Zeitdauer 56 konstant gehalten werden, wobei die Drahtvorschubgeschwindigkeit V nach einer steigenden Rampenfunktion bzw. anhand einer steigenden Profil-Regelung bis zum Zeitpunkt 38 des Kurzschlusses verläuft. Dadurch erfolgt eine kontinuierliche Annäherung des Schweißdrahtes 13 an das Werkstück 16, wobei während der Zeitdauer 56 eine erhöhte bzw. definierte Anschmelzung des Schweißdrahtes 13 erfolgt und der Abstand 33 während der Zeitdauer 46 annähernd konstant gehalten wird. Nach Ablauf der Zeitdauer 56 erfolgt eine frühzeitige Einleitung des Kurzschlusses, wobei hierbei, wie bereits bekannt, während der Zeitdauer 47 der Arbeitsstrom 41 abgesenkt wird. Dadurch wird während der Zeitdauer 47 nur mehr eine geringe Abschmelzrate hervorgerufen bzw. der Tropfen 37 im flüssigen Zustand gehalten. Durch eine Verlängerung der Zeitdauer 56, in welcher der Arbeitsstrom 41 konstant gehalten wird, erfolgt eine längere und erhöhte bzw. definierte Anschmelzung des Schweißdrahtes 13, wodurch eine größere Zusatzmaterialmenge abgeschmolzen werden kann.

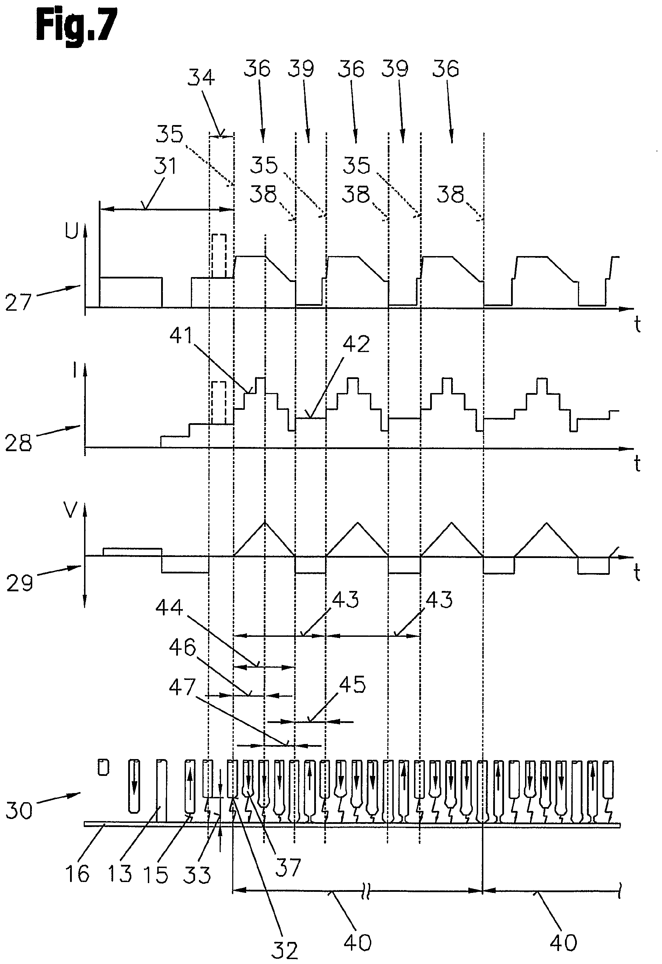

In Fig. 7 ist ein dreiecksförmiger Verlauf des Schweißstromes I bzw. Arbeitsstromes 41 und der Drahtvorschubgeschwindigkeit V während der Lichtbogenphase 36 dargestellt, wobei der Arbeitsstrom 41 stufenförmig ansteigt bzw. abfällt. Der Arbeitsstrom 41 und die Drahtvorschubgeschwindigkeit V steigen während der Zeitdauer 46 an und der Abstand 33 bzw. die Länge des Lichtbogens 15 wird konstant gehalten. Anschließend erfolgt durch die sinkende Drahtvorschubgeschwindigkeit V während der Zeitdauer 47 eine allmähliche Einleitung des Kurzschlusses, welcher zum definierten Zeitpunkt 38 eintritt.

Eine besonders vorteilhafte Anwendung für die Regelung in Abhängigkeit der Lichtbogenlänge liegt bei der Anwendung im Handschweißbereich, da dadurch die Zitterbewegungen des Schweißers von der Steuervorrichtung 4 automatisch ausgeregelt werden. Somit kann auch beim Handschweißen der CMT-Prozess mit der eingestellten Bewegungsfrequenz 40 durchgeführt werden.

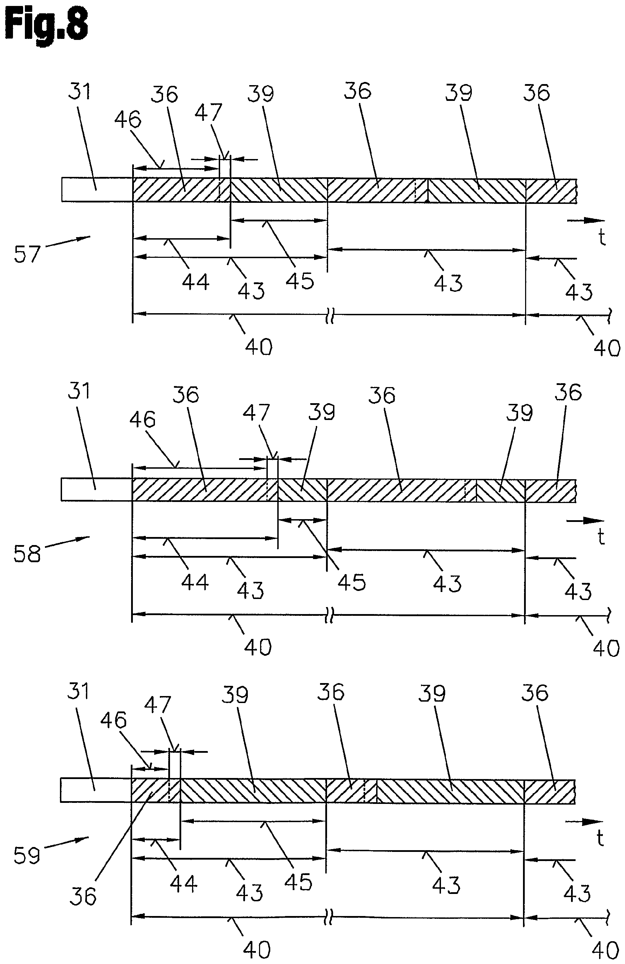

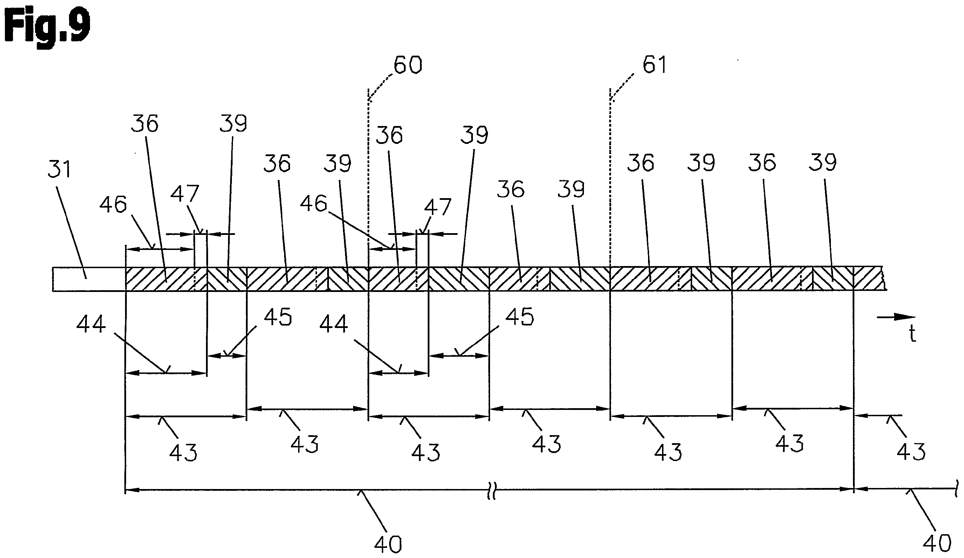

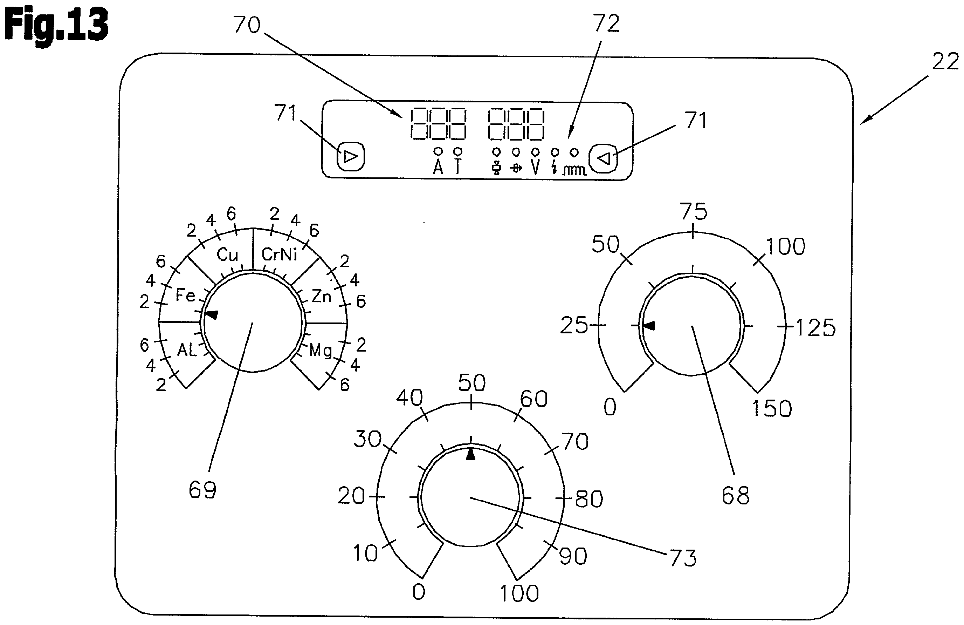

In den Fig. 8 und 9 sind Zeitverläufe von verschiedenen Verfahrensvarianten zur Veränderung der Wärmeeinbringung ins Werkstück 16 dargestellt. Durch die Regelung des Verhältnisses von Lichtbogenphase 36 zu Kurzschlussphase 39 unter Einhaltung der eingestellten Bewegungsfrequenz 40 bzw. der Periodendauer 43 kann die Temperatur des Schmelzbades und die Zusatzmaterialmenge geregelt wird. Dies erfolgt beispielsweise durch eine am Schweißgerät 1 einstellbarer Wärmeeinbringung. Mit der Wärmeeinbringung wird insbesondere die Dauer der Lichtbogenphase 36 festgelegt, da hier die Zusatzmaterialmenge und die Wärmeeinbringung ins Werkstück 16 aufgrund der Länge bzw. Zeit des anstehenden Lichtbogens 15 bestimmt wird. Beispielsweise kann gemäß Fig. 13 für die Wärmeeinbringung eine Skala von 1 bis 100 festgelegt werden, wobei eine Wärmeeinbringung von 50 bedeutet, dass die Dauer der Lichtbogenphase 36 und die Dauer der Kurzschlussphase 39 gleich ist. Wird der Wert für die Wärmeeinbringung größer als 50 gewählt, erhöht sich die Dauer der Lichtbogenphase 36 gegenüber der Dauer der Kurzschlussphase 39. Umgekehrt, wenn der Wert kleiner als 50 gewählt wird, verringert sich die Dauer der Lichtbogenphase 36 und erhöht sich die Dauer der Kurzschlussphase 39.

In Fig. 8 sind vereinfachte schematische Darstellungen des Verhältnisses von Lichtbogenphase 36 zu Kurzschlussphase 39 in der Periodendauer 43 in Form von Diagrammen gezeigt, wobei für die einzelnen Diagramme verschiedene Werte für die Wärmeeinbringung ins Werkstück 16 gewählt sind. Im Diagramm 57 ist für die Wärmeeinbringung der Wert 50 gewählt, im Diagramm 58 der Wert 75 und im Diagramm 59 ist der Wert 25 gewählt, woraus sich eine entsprechende Dauer für die Lichtbogenphase 36 und Kurzschlussphase 39 ergibt.

In Fig. 9 ist eine Verfahrensvariante in vereinfachter schematischer Darstellung gezeigt, in der die am Schweißgerät 1 manuell eingestellte Wärmeeinbringung automatisch von der Steuervorrichtung 4 an das Material des Werkstücks 16 angepasst wird. Daraus ergeben sich unterschiedliche Verhältnisse von Lichtbogenphase 36 zu Kurzschlussphase 39 in den einzelnen Periodendauern 43 der Bewegungsfrequenz 40. Insbesondere ergeben sich in den Periodendauern 43 unterschiedliche Zeitdauern 44 und 45 für die Lichtbogenphase 36 und die Kurzschlussphase 39, wobei die Periodendauern 43 unverändert bleiben. Dies hat zur Folge, dass durch die veränderliche Zeitdauer 44 der Lichtbogenphase 36 die Wärmeeinbringung ins Werkstück 16 automatisch verändert wird. Dies erfolgt beispielsweise derart, dass die Temperatur des Werkstücks 16 überwacht wird, wodurch falsch eingestellte Werte für die Wärmeeinbringung ausgeglichen werden können. Beispielsweise wird der Schweißprozess mit dem eingestellten Wert 75 für die Wärmeeinbringung und dem daraus resultierenden Verhältnis von Lichtbogenphase 36 zu Kurzschlussphase 39 nach der Zündphase 31 mit der Periodendauer 43 gestartet. Dabei kann die Temperatur des Werkstücks 16, beispielsweise anhand von Temperatursensoren oder Wärmebildkameras, erfasst werden, worauf die Steuervorrichtung 4 dementsprechend den Wert für die Wärmeeinbringung bzw. die Dauer der Lichtbogenphase 36 bzw. der Zeitdauer 44 während des Schweißprozesses erhöht bzw. erniedrigt. Somit stellt sich ein neues Verhältnis von Lichtbogenphase 36 zu Kurzschlussphase 39 ein. Wie zum Zeitpunkt 60 ersichtlich, kann die Wärmeeinbringung ins Werkstück 16 durch eine verkürzte Lichtbogenphase 36 über eine oder mehrere Periodendauern 43 reduziert werden. Sinkt die Temperatur des Werkstücks 16 unter einen in der Steuervorrichtung 4 hinterlegten Schwellwert, welcher vom Material des Werkstücks 16 abhängt, wird der Wert für die Wärmeeinbringung von der Steuervorrichtung 4 automatisch entsprechend angepasst. Dies erfolgt beispielsweise dadurch, dass der manuell am Schweißgerät 1 eingestellte Wert für die Wärmeeinbringung von der Steuervorrichtung 4 eingestellt und somit wieder erhöht wird, wie zum Zeitpunkt 61 dargestellt. Weiters werden von der Steuervorrichtung 4 entsprechend dem eingestellten Verhältnis von Lichtbogenphase 36 zu Kurzschlussphase 39 die Schweißparameter, insbesondere der Schweißstrom I und die Drahtvorschubgeschwindigkeit V, angepasst.

Selbstverständlich kann auch ein bestimmtes Verhältnis der Dauer der Lichtbogenphase 36 zur Dauer der Kurzschlussphase 39, beispielsweise 2/3 Lichtbogenphase und 1/3 Kurzschlussphase, von der Steuervorrichtung definiert und der Stellung bzw. Skala 50 zugeordnet werden, wobei beim Verstellen des Wertes dann beispielsweise eine prozentuelle Änderung des Verhältnisses vorgenommen wird.

Unabhängig von der Regelung in Bezug auf die Wärmeeinbringung und der Bewegungsfrequenz 40 bzw. der Periodendauer 43 kann zusätzlich auch eine entsprechende Regelung zur Anpassung der Lichtbogenphase 36 und der Kurzschlussphase 39 bei Sonderzuständen im Schweißprozess, wie beispielsweise beim unvorhergesehenen Auftreten eines Kurzschlusses, erfolgen, um die eingestellte Bewegungsfrequenz 40 zu erreichen bzw. den CMT-Prozess auf die vordefinierten Periodendauern 43 zurückzuführen.

Die Wärmeeinbringung ins Werkstück 16 kann auch mit über den Schweißstrom I bzw. den Arbeitsstrom 41 geregelt werden. Ist beispielsweise mehr Wärmeeinbringung ins Werkstück 16 nötig, kann der Arbeitsstrom 41 während der Zeitdauer 46 der Lichtbogenphase 36 entsprechend erhöht werden, wobei die Zeitdauer 44 für die Lichtbogenphase 36 unverändert bleibt. Dementsprechend führt eine Senkung des Arbeitsstromes 41 während der Zeitdauer 44 in der Lichtbogenphase 36 zu einer Verringerung der Wärmeeinbringung ins Werkstück 16.

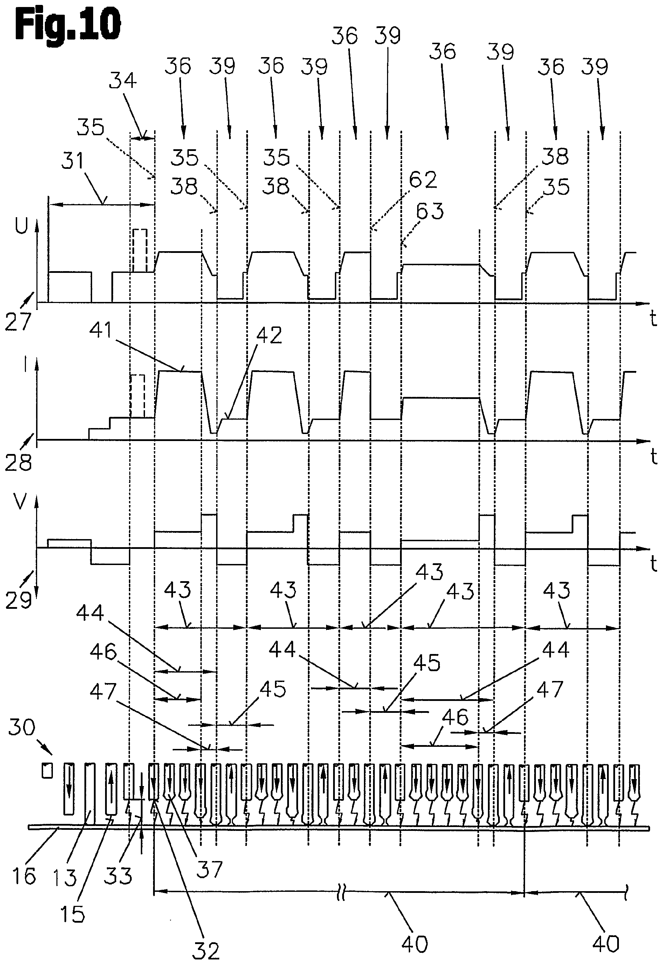

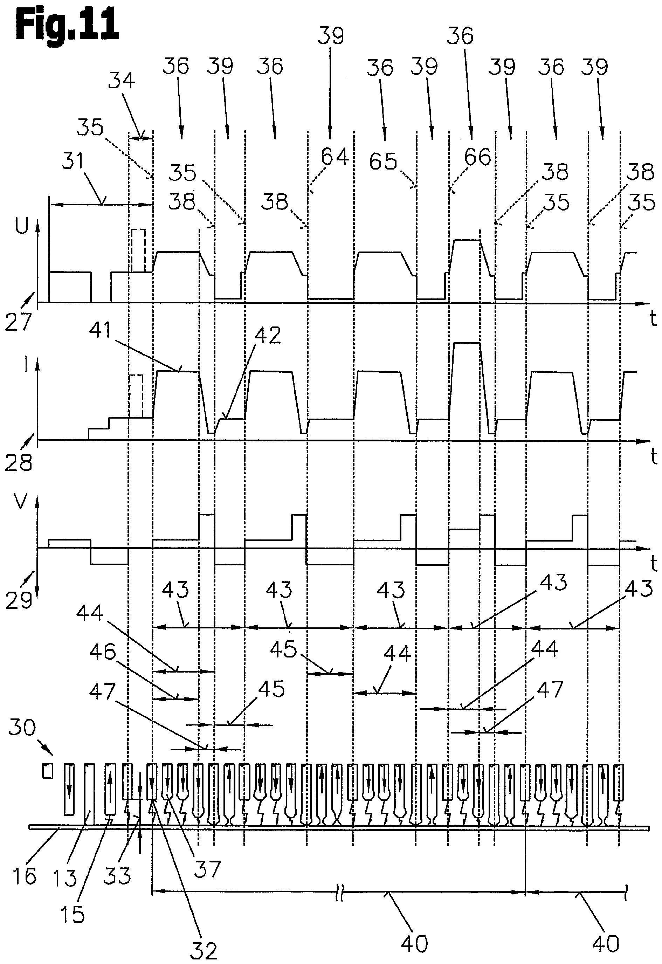

In den Fig. 10 und 11 sind Ausführungsbeispiele für die Regelung der Lichtbogenphase 36 und der Kurzschlussphase 39 eines CMT-Prozesses bei Sonderzuständen beschrieben.

In Fig. 10 ist ein Ausführungsbeispiel dargestellt, bei dem ein undefinierter Kurzschluss, wie beispielsweise durch Schmelzbadbewegungen und/oder Zitterbewegungen beim Handschweißen verursacht, während der Lichtbogenphase 36 eintritt (Zeitpunkt 62). Durch das Auftreten des undefinierten Kurzschlusses zum Zeitpunkt 62 wird die Lichtbogenphase 36 unterbrochen und die Zeitdauer 44 entsprechend verkürzt, wodurch der definierte Kurzschluss zum Zeitpunkt 38 nicht stattfindet. Der undefinierte Kurzschluss zum Zeitpunkt 62 wird von der Steuervorrichtung 4 erkannt, wodurch der Arbeitsstrom 41 abrupt auf den Grundstrom 42 abgesenkt wird und die Drahtvorschubgeschwindigkeit V umgekehrt bzw. der Schweißdraht 13 vom Werkstück 16 weggezogen wird. Weiters wird zum Zeitpunkt 62 von der Steuervorrichtung 4 die folgende Kurzschlussphase 39 mit der vordefinierten Zeitdauer 45 und den hinterlegten Schweißparametern, wie beispielsweise dem Grundstrom 42 und der konstanten Drahtvorschubgeschwindigkeit V, eingeleitet. Somit wird die durch die eingestellte Bewegungsfrequenz 40 definierte Periodendauer 43 unterschritten.

Um die ursprünglich durch die eingestellte Bewegungsfrequenz 40 definierten Zeitpunkte 38 für die Kurzschlüsse wieder zu erreichen, wird von der Steuervorrichtung 4 anschließend eine verlängerte Lichtbogenphase 36 mit der entsprechenden Zeitdauer 44 berechnet und die Schweißparameter, insbesondere der Schweißstrom I und die Drahtvorschubgeschwindigkeit V, angepasst. Somit tritt nach der Kurzschlussphase 39 zum Zeitpunkt 63 die verlängerte Lichtbogenphase 36 ein, welche eine längere Zeitdauer 44 aufweist. Hierbei werden der Arbeitsstrom 41 und die Drahtvorschubgeschwindigkeit auf einen niedrigeren Wert konstant gehalten, wodurch die gleiche Zusatzmaterialmenge und Wärmeeinbringung erreicht wird, wie dies bei der von der Steuervorrichtung 4 voreingestellten und konstanten Lichtbogenphase 36 vor dem undefinierten Kurzschluss zum Zeitpunkt 62 der Fall war. Weiters wird in der verlängerten Lichtbogenphase 36 nach der längeren Zeitdauer 46, in welcher der Abstand 33 konstant gehalten wird, in der folgenden Zeitdauer 47 der nächste Kurzschluss gezielt eingeleitet. Dies erfolgt, wie bereits bekannt, durch Absenken des Arbeitsstromes 41 und Erhöhung der Drahtvorschubgeschwindigkeit, sodass der nächste Kurzschluss und die darauffolgenden Kurzschlüsse wieder zu den am Beginn des Schweißprozesses definierten Zeitpunkten 38 eintreten.

In Fig. 11 ist ein Ausführungsbeispiel dargestellt, bei dem die Periodendauer 43 bzw. die Zeitdauer 45 verlängert wird, wie dies beispielsweise bei Zitterbewegungen beim Handschweißen der Fall sein kann. Während eines Schweißprozesses kann sich die Tropfenablöse in der auf eine Lichtbogenphase 36 folgende Kurzschlussphase 39 durch Zitterbewegungen ungewollt verzögern, wie dies in der zum Zeitpunkt 64 beginnenden Zeitdauer 45 dargestellt ist. Daraus ergibt sich eine längere Periodendauer 43. Die folgende Lichtbogenphase 36 und Kurzschlussphase 39 finden mit der von der Steuervorrichtung 4 vordefinierten Zeitdauer 44 und 45 statt, wobei die Periodendauer 43 durch die verlängerte Kurzschlussphase 39 zeitlich nach hinten verschoben ist. Dadurch tritt der in der Lichtbogenphase 36 eingeleitete Kurzschluss nicht zu dem durch die am Beginn des Schweißprozesses eingestellte Bewegungsfrequenz 40 definierten Zeitpunkt 38, sondern zu einem verspäteten Zeitpunkt 65, ein. Damit der nächste Kurzschluss wieder zu dem am Beginn des Schweißprozesses definierten Zeitpunkt 38 eintritt, folgt nun eine von der Steuervorrichtung 4 berechnete verkürzte Lichtbogenphase 36 bzw. Zeitdauer 44, welche zum Zeitpunkt 66 startet. Hierbei werden die Schweißparameter, insbesondere der Schweißstrom bzw. der Arbeitsstrom 41 und die Drahtvorschubgeschwindigkeit, in der Zeitdauer 46 derart erhöht, dass die Zusatzmaterialmenge und die Wärmeeinbringung in der verkürzten Zeitdauer 46 unverändert gegenüber einer Lichtbogenphase 36 mit der vordefinierten Zeitdauer 44 bzw. 46 bleibt. Nach der verkürzten Zeitdauer 46 erfolgt in der Zeitdauer 47 während der Lichtbogenphase 36 die bereits bekannte Einleitung des definierten Kurzschlusses, sodass dieser zum definierten Zeitpunkt 38 eintritt. Somit folgen nun die definierten Kurzschlüsse wieder zu den Zeitpunkten 38 mit den durch die Bewegungsfrequenz 40 definierten Periodendauern 43.

Im Allgemeinen sei zu den Fig. 10 und 11 angemerkt, dass die Regelung der Lichtbogenphase 36 und der Kurzschlussphase 39 zum Erreichen der durch die Bewegungsfrequenz 40 definierten Kurzschlusszeitpunkte in den Periodendauern 43, woraus sich ein Kurzschlussraster ergibt, mehrere Periodendauern 43 in Anspruch nehmen kann. Somit ist die aus der eingestellten Bewegungsfrequenz 40 resultierende Periodendauer 43 eine mittlere Periodendauer 43. Ebenso kann ein Überschreiten des Kurzschlussrasters, wie in den Fig. 10 und 11 beschrieben, derart gelöst werden, dass das Kurzschlussraster und das von der Steuervorrichtung 4 berechnete Schweißprozessprofil neu gestartet wird, also ein Reset erfolgt. Dies kann beispielsweise nach Ablauf einer Periodendauer 43, also mit Beginn einer Lichtbogenphase 36, oder direkt nach dem Auftreten eines undefinierten Kurschlusses erfolgen.

Wie in den Ausführungsvarianten beschrieben, erfolgt die Regelung zur Einhaltung der Bewegungsfrequenz 40 bevorzugt in den Lichtbogenphasen 36, da hier in vorteilhafter Weise die Wärmeeinbringung bzw. die Schmelzbadtemperatur und die Zusatzmaterialmenge geregelt bzw. gesteuert werden kann. Selbstverständlich ist es auch möglich, dass eine veränderte Zeitdauer 44 oder 45 durch die nachfolgende Zeitdauer 44 oder 45 bzw. Prozessphase kompensiert wird, wobei dazu eine höhere Prozessorleistung bzw. ein höherer regelungstechnischer Aufwand erforderlich ist.

Durch die gezielte Absenkung des Schweißstromes bzw. des Arbeitsstromes 41 in der Lichtbogenphase 36 zur Einleitung des Kurzschlusses bzw. der Kurzschlussphase 39 können Schweißspritzer vermieden werden.

Ein wesentlicher Vorteil der Bewegungsfrequenz-Regelung besteht darin, dass auf die Schwingungen des Schmelzbades Einfluss genommen werden kann, insbesondere die Schwingung kompensiert oder verstärkt werden kann. Beispielsweise wird bei einer niedrigen Bewegungsfrequenz 40 die Eigenschwingung des Schmelzbades gering gehalten, wodurch ein ruhiges Schmelzbad mit geringen Schweißspritzern resultiert. Umgekehrt führt eine Erhöhung der Bewegungsfrequenz 40 dazu, dass die Eigenschwingung des Schmelzbades erhöht wird, wodurch eine bessere Spaltüberbrückung erreicht wird.

Im Allgemeinen wird für einen Schweißprozess eine Vielzahl von Schweißparametern benötigt, welche direkt am Schweißgerät 1 eingestellt werden oder indirekt von der Steuervorrichtung 4 berechnet und geregelt bzw. gesteuert werden. Wie in den Ausführungsvarianten beschrieben, sind zumindest zwei Parameter, die Bewegungsfrequenz 40 und zumindest ein weiterer Schweißparameter, wie beispielsweise das Material, direkt am Schweißgerät 1 vom Bediener einzustellen. Alle weiteren Schweißparameter werden von der Steuervorrichtung 4 erfasst und/oder berechnet und eingestellt.

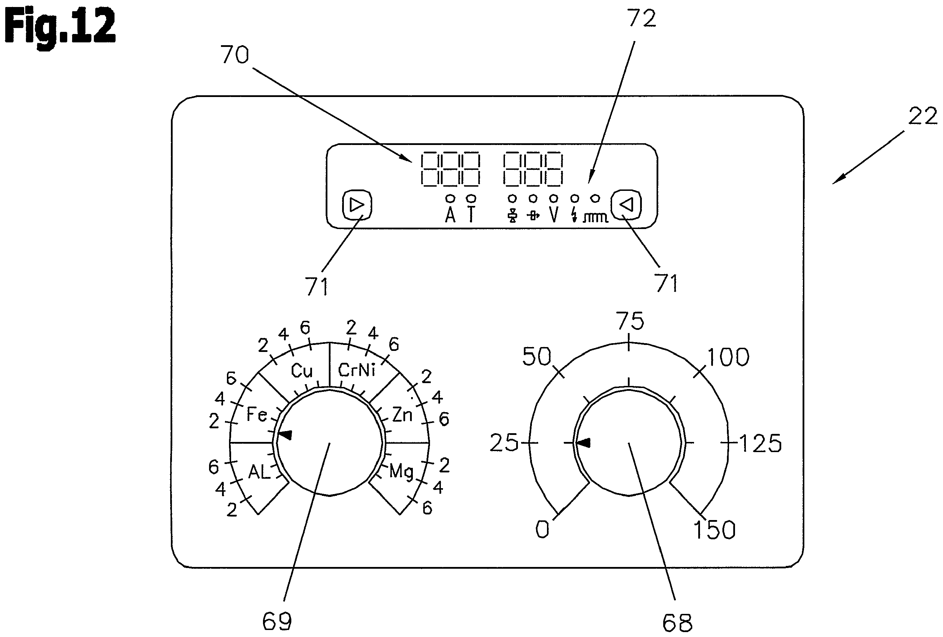

Für die Eingabe der Schweißparameter ist in Fig. 12 eine Ein- und/oder Ausgabevorrichtung 22 dargestellt, wobei die eingestellten Schweißparameter an die Steuervorrichtung 4 des Schweißgerätes 1 weitergeleitet werden, sodass von dieser ein entsprechender Schweißprozess gesteuert bzw. geregelt werden kann. An der Ein- und/oder Ausgabevorrichtung 22 sind bei dem gezeigten Ausführungsbeispiel zwei Drehknöpfe 68, 69 angeordnet, wobei mit dem Drehknopf 68 die Bewegungsfrequenz 40 und mit dem Drehknopf 69 das Material und dessen Dicke eingestellt werden kann. Mit dem Drehknopf 68 wird die Bewegungsfrequenz 40 des Schweißdrahtes 13 auf einer Skala von 0 Hz bis 150 Hz eingestellt, wobei die Bewegungsfrequenz 40 die Anzahl der Kurzschlüsse pro Sekunde definiert. Weiters ist an der Ein- und/oder Ausgabevorrichtung 22 ein Display 70 angeordnet, welches Auskunft über die von der Steuervorrichtung 4 berechneten Schweißparameter, wie Schweißstrom, Drahtvorschubgeschwindigkeit, usw., gibt. Mit einer der Tasten 71, welche an der Ein- und/oder Ausgabevorrichtung 22 angeordnet sind, kann umgeschaltet werden, welcher Schweißparameter am Display 70 angezeigt werden soll. Hierzu sind an der Ein- und/oder Ausgabevorrichtung 22 unterhalb des Displays 70 Leuchtdioden 72 und Abkürzungen für die Schweißparameter, beispielsweise A für den Schweißstrom, angeordnet. Die Leuchtdioden 72 zeigen somit den Schweißparameter an, dessen Wert im Display 70 dargestellt ist. Durch die Kombination der Einstellungen an den Drehknöpfen 68 und 69 kann die Steuervorrichtung 4 Zeitdauern für die Lichtbogenphase 36 und die Kurzschlussphase 39 berechnen, wobei die weiteren Schweißparameter zum Erreichen der Zeitdauern ebenfalls automatisch berechnet werden.

Weiters ist es auch möglich, dass mehrere Schweißparameter vom Benutzer eingestellt werden, woraus das Schweißprozessprofil von der Steuervorrichtung 4 berechnet wird. Hierzu ist beispielsweise, wie in Fig. 13 dargestellt, ein zusätzlicher Drehknopf 73 angeordnet, über den die Wärmeeinbringung ins Werkstück 16 an der Ein- und/oder Ausgabevorrichtung 22 eingestellt werden kann. Hierbei kann der Drehknopf 73 beispielsweise eine Skala für den Wert der Wärmeeinbringung von 1 bis 100 aufweisen, wobei der Wert beispielsweise die Zeitdauer für die Lichtbogenphase 36 und die Schweißstromhöhe bestimmt. Somit ergibt sich in Verbindung mit der Bewegungsfrequenz 40 ein Verhältnis zwischen Lichtbogenphase 36 und Kurzschlussphase 39.

Selbstverständlich kann der Benutzer beliebig viele Schweißparameter, insbesondere den Schweißstrom I, die Schweißspannung U, den Schweißdrahtdurchmesser, die Drahtvorschubgeschwindigkeit V, usw., vorgeben, aus denen die Steuervorrichtung 4 das Schweißprozessprofil berechnet. Diese Einstellungen können beispielsweise mit einer der Tasten 71 gespeichert werden. Dabei ist es auch möglich, dass der Benutzer die über das Display 70 angezeigten Werte eines Schweißparameters jederzeit verändern kann, worauf von der Steuervorrichtung 4 eine Korrektur für die weiteren Schweißparameter vorgenommen wird, um wiederum die eingestellte Bewegungsfrequenz 40 zu erreichen. Auch ist es möglich, dass anstelle der dargestellten Ein- und/oder Ausgabevorrichtung 22 ein Touch-Screen oder andere aus dem Stand der Technik bekannte Ein- und/oder Ausgabevorrichtungen 22 eingesetzt werden können.

Für die Festlegung der einzelnen Sollwerte der Schweißparameter können im Schweißgerät 1 verschiedenste Kennlinien in einer Datenbank hinterlegt bzw. durch entsprechende Berechnungsverfahren die einzelnen Werte berechnet werden.

Die Schweißparameter, insbesondere die Bewegungsfrequenz 40 und die Wärmeeinbringung ins Werkstück 16, können auch über einen im Schweißbrenner 10 integrierten Fernregler eingestellt oder geändert werden. Dies wird in vorteilhafter Weise bei Handschweißprozessen eingesetzt, da hier, insbesondere während einem Schweißprozess, rasch die Schweißparameter angepasst werden könne, sofern dies nicht automatisch von der Steuervorrichtung 4 geregelt wird.

## Patentansprüche

1. Kalt-Metall-Transfer-Schweißverfahren, bei dem der Schweißprozess durch zyklische Abwechslung einer Lichtbogenphase (36) und einer Kurzschlussphase (39) definiert ist, wobei während der Lichtbogenphase (36) ein Schweißdraht (13) bis zur Berührung mit dem Werkstück (16) in Richtung Werkstück (16) bewegt wird, anschließend nach Bildung eines Kurzschlusses während der Kurzschlussphase (39) die Drahtförderung umgekehrt und der Schweißdraht (13) vom Werkstück (16) wegbewegt wird, wobei der Schweißstrom (I) und/oder die Schweißspannung (U) während der Lichtbogenphase (36) derart geregelt wird, dass der Schweißdraht (13) angeschmolzen und ein Tropfen gebildet wird und dass während der Kurzschlussphase (39) ein Öffnen des Kurzschlusses über den Schweißstrom (I) unterbunden wird, wobei zur Festlegung des Schweißprozesses Schweißparameter eingestellt werden, **dadurch gekennzeichnet, dass** als ein Schweißparameter über ein Steuerorgan eine Bewegungsfrequenz (40) des Schweißdrahtes (13), mit welcher die Anzahl der Lichtbogenphasen (36) und Kurzschlussphasen (39) pro Sekunde definiert wird und zumindest ein weiterer Schweißparameter direkt eingestellt werden, und von einer Steuervorrichtung (4) automatisch alle weiteren erforderlichen Schweißparameter zur Einhaltung der eingestellten Bewegungsfrequenz (40) aufgrund von hinterlegten Werten bzw. durch entsprechende Berechnungsverfahren ermittelt und eingestellt und geregelt werden, und dass die Länge des Lichtbogens (15) zwischen dem Schweißdraht (13) und dem Werkstück (16) während der Lichtbogenphase (36) überwacht wird und Änderungen der Lichtbogenlänge über die Schweißparameter, insbesondere die Drahtvorschubgeschwindigkeit (V) und den Schweißstrom (I), derart geregelt werden, dass die Kuzschlussphase (39) mit der eingestellten Bewegungsfrequenz (40) eintritt.

2. Schweißverfahren nach Anspruch 1, **dadurch gekennzeichnet, dass** zusätzlich zur Bewegungsfrequenz (40) die Materialstärke eingestellt wird.

3. Schweißverfahren nach Anspruch 1 oder 2, **dadurch gekennzeichnet, dass** zusätzlich zur Bewegungsfrequenz (40) der Durchmesser des Schweißdrahtes (13) eingestellt wird.

4. Schweißverfahren nach einem der Ansprüche 1 bis 3, **dadurch gekennzeichnet, dass** zusätzlich zur Bewegungsfrequenz (40) die Abschmelzrate eingestellt wird.

5. Schweißverfahren nach einem der Ansprüche 1 bis 4, **dadurch gekennzeichnet, dass** während der Lichtbogenphase (36) über eine definierte Zeitdauer zur Bildung des Tropfens (37) am Schweißdraht (13) Schweißparameter, wie beispielsweise der Schweißstrom (I) und/oder die Drahtvorschubgeschwindigkeit (V) derart geregelt werden, dass bei konstanter Drahtvorschubgeschwindigkeit (V) ein konstanter Abstand (33) des Schweißdrahtes (13) zum Werkstück (16), welcher der Länge des Lichtbogens (15) zwischen dem Schweißdraht (13) und dem Werkstück (16) entspricht, erzielt wird.

6. Schweißverfahren nach einem der Ansprüche 1 bis 5, **dadurch gekennzeichnet, dass** während der Lichtbogenphase (36) zur Einleitung der Kurzschlussphase (39) der Schweißstrom (I) abgesenkt wird, sodass der Tropfen (37) des Schweißdrahtes (13) ohne weiteres Anschmelzen des Schweißdrahtes (13) in verflüssigtem Zustand gehalten wird.

7. Schweißverfahren nach einem der Ansprüche 1 bis 6, **dadurch gekennzeichnet, dass** während der Lichtbogenphase (36) zur Einleitung der Kurzschlussphase (39), insbesondere während oder nach dem Absenken des Schweißstromes (I), die Drahtvorschubgeschwindigkeit (V) erhöht wird, um die Länge des Lichtbogens (15) zwischen dem Schweißdraht (13) und dem Werkstück (16) bis zum Kurzschluss zu reduzieren.

8. Schweißverfahren nach einem der Ansprüche 1 bis 7, **dadurch gekennzeichnet, dass** während der Kurzschlussphase (39) die Schweißparameter zur Veränderung der Dauer der Kurzschlussphase (39) geregelt werden, sodass die anschließende Lichtbogenphase (36) mit der eingestellten Bewegungsfrequenz (40) eintritt.

9. Schweißverfahren nach einem der Ansprüche 1 bis 8, **dadurch gekennzeichnet, dass** zusätzlich zur Bewegungsfrequenz (40) eine Wärmeeinbringung in das Werkstück (16) eingestellt wird, und das Verhältnis der Dauer der Kurzschlussphase (39) zur Dauer der Lichtbogenphase (36) und/oder ein Profil des Schweißstromes (I) in Abhängigkeit der eingestellten Wärmeeinbringung festgelegt wird.

10. Schweißverfahren nach einem der Ansprüche 1 bis 9, **dadurch gekennzeichnet, dass** die Bewegungsfrequenz (40) zwischen 1 Hz und 150 Hz, bevorzugt zwischen 30 Hz und 70 Hz, eingestellt wird.

11. Schweißverfahren nach einem der Ansprüche 1 bis 10, **dadurch gekennzeichnet, dass** die Schweißparameter in Abhängigkeit eines definierten Profils der Länge des Lichtbogens (15) bzw. der Schweißspannung (U) ermittelt und eingestellt oder geregelt werden.

12. Schweißanlage mit einem Schweißgerät (1), zumindest einer Steuervorrichtung (4) mit einem Speicher für Betriebsdaten bzw. Programme, wobei die Steuervorrichtung zur Durchführung eines Kalt-Metall-TransferSchweissverfahrens ausgebildet ist, bei dem der Schweissprozess durch zyklische Abwechslung einer Lichtbogenphase und einer Kurzschlussphase definiert ist, wobei während der Lichtbogenphase ein Schweissdraht bis zur Berührung mit dem Werkstück in Richtung Werkstück bewegt wird, anschliessend nach Bildung eines Kurzschlusses während der Kurzschlussphase die Drahtförderung umgekehrt und der Schweissdraht vom Werkstück wegbewegt wird, wobei der Schweissstrom und/oder die Schweissspannung während der Lichtbogenphase derart geregelt wird, dass der Schweissdraht angeschmolzen und ein Tropfen gebildet wird und dass während der Kurzschlussphase ein Öffnen des Kurzschlusses über den Schweissstrom unterbunden wird, ausgebildet ist, einer Stromquelle (2), einem Drahtvorschubgerät (11) zur Förderung eines Schweißdrahtes (13), einem am Schweißgerät (1) anschließbaren Schweißbrenner (10) und einer Ein- und/oder Ausgabevorrichtung (22) mit zumindest zwei Steuerorganen zum Einstellen von Schweißparametern, **dadurch gekennzeichnet, dass** an der Ein- und/oder Ausgabevorrichtung (22) ein Steuerorgan zum direkten Einstellen einer Bewegungsfrequenz (40), mit welcher die Anzahl der Lichtbogenphasen (36) und Kurzschlussphasen (39) pro Sekunde definiert wird, angeordnet ist, und dass die Steuervorrichtung (4) zur automatischen Ermittlung und Einstellung und Regelung aller weiteren erforderlichen Schweißparameter aufgrund von hinterlegten Werten bzw. durch entsprechende Berechnungsverfahren zur Einhaltung der eingestellten Bewegungsfrequenz (40) ausgebildet ist.

13. Schweißanlage nach Anspruch 12, **dadurch gekennzeichnet, dass** das Steuerorgan zum Einstellen der Bewegungsfrequenz (40) als Drehknopf (68) ausgebildet ist, allenfalls mit einer neben oder auf dem Drehknopf (68) angeordneten Skala.

14. Schweißanlage nach Anspruch 12 oder 13, **dadurch gekennzeichnet, dass** an der Ein- und/oder Ausgabevorrichtung (22) ein Steuerorgan zum Einstellen des Materials und der Materialdicke des Werkstückes (16) angeordnet ist.

15. Schweißanlage nach Anspruch 14, **dadurch gekennzeichnet, dass** das Steuerorgan zum Einstellen des Materials und der Materialdicke als Drehknopf (69) ausgebildet ist, allenfalls mit einer neben oder auf dem Drehknopf (69) angeordneten und dem Material und der Materialdicke zugeordneten Skala.

16. Schweißanlage nach einem der Ansprüche 12 bis 15, **dadurch gekennzeichnet, dass** an der Ein- und/oder Ausgabevorrichtung (22) ein Steuerorgan zum Einstellen eines Wertes für die Wärmeeinbringung ins Werkstück (16) angeordnet ist.

17. Schweißanlage nach Anspruch 16, **dadurch gekennzeichnet, dass** das Steuerorgan zum Einstellen des Wertes für die Wärmeeinbringung ins Werkstück (16) als Drehknopf (73) ausgebildet ist, allenfalls mit einer neben oder auf dem Drehknopf (73) angeordneten und der Wärmeeinbringung zugeordneten Skala.

18. Schweißanlage nach einem der Ansprüche 12 bis 17, **dadurch gekennzeichnet, dass** zumindest ein Steuerorgan durch eine Anzeige mit einem Eingabefeld gebildet ist.

19. Schweißanlage nach Anspruch 18, **dadurch gekennzeichnet, dass** zumindest ein Steuerorgan als Touch-Screen ausgebildet ist.

20. Schweißanlage nach einem der Ansprüche 12 bis 19, **dadurch gekennzeichnet, dass** ein Fernregler zur Einstellung der Schweißparameter, insbesondere der Bewegungsfrequenz (40), und des Wertes für die Wärmeeinbringung am Schweißbrenner (10) angeordnet ist.

## Claims

1. A cold-metal-transfer welding process, in which the welding process is defined by the cyclic alternation of an electric arc phase (36) and a short-circuit phase (39), wherein, during the electric arc phase (36), a welding wire (13) is moved in the direction of a workpiece (16) until contacting the workpiece (16), subsequently, after the formation of a short-circuit and during the short-circuit phase (39), the wire transport is reversed and the welding wire (13) is moved away from the workpiece (16), wherein the welding current (I) and/or the welding voltage (U) are controlled during the electric arc phase (36) in such a manner that the welding wire (13) is melted to form a droplet and that an opening of the short-circuit during the short-circuit phase (39) is prevented via the welding current (I), wherein welding parameters are set to determine the welding process, **characterized in that**, via a control element, as one of the welding parameters a movement frequency (40) of the welding wire (13), by which the number of electric arc phases (36) and short-circuit phases (39) per second is defined, and at least one additional welding parameter are set directly, and all the other welding parameters required to maintain the preset movement frequency (40) are determined and set and controlled automatically by a control device (4) due to stored values and/or by appropriate calculation methods, and that the length of the electric arc (15) between the welding wire (13) and the workpiece (16) is monitored during the electric arc phase (36), and changes in the length of the electric arc are controlled via the welding parameters, in particular, via the wire feed speed (V) and the welding current (I), in such a manner as to cause the short-circuit phase (39) to occur at the set movement frequency (40).

2. The welding process according to claim 1, **characterized in that** the material thickness is set in addition to the movement frequency (40).

3. The welding process according to claim 1 or 2, **characterized in that** the diameter of the welding wire (13) is set in addition to the movement frequency (40).

4. The welding process according to any one of claims 1 to 3, **characterized in that** the melting rate is set in addition to the movement frequency (40).

5. The welding process according to any one of claims 1 to 4, **characterized in that** welding parameters such as, for instance, the welding current (I) and/or the wire feed speed (V), during the electric arc phase (36) over a defined time duration for the formation of a droplet (37) on the welding wire (13), are controlled in such a manner that a constant distance (33) of the welding wire (13) to the workpiece (16) is achieved at a constant wire feed speed (V), which distance (33) corresponds to the length of the electric arc (15) between the welding wire (13) and the workpiece (16).

6. The welding process according to any one of claims 1 to 5, **characterized in that**, during the electric arc phase (36), in order to initiate the short-circuit phase (39), the welding current (I) is lowered to keep the droplet (37) of the welding wire (13) in the molten state without further melting of the welding wire (13).

7. The welding process according to any one of claims 1 to 6, **characterized in that**, during the electric arc phase (36), in order to initiate the short-circuit phase (39), particularly during or after the lowering of the welding current (I), the wire feed speed (V) is increased to reduce the length of the electric arc (15) between the welding wire (13) and the workpiece (16) until the short-circuit occurs.

8. The welding process according to any one of claims 1 to 7, **characterized in that**, during the short-circuit phase (39), the welding parameters are controlled to change the duration of the short-circuit phase (39) so as to cause the subsequent electric arc phase (36) to occur with the set movement frequency (40).

9. The welding process according to any one of claims 1 to 8, **characterized in that**, in addition to the movement frequency (40), a heat input into the workpiece (16) is set, and the ratio of the duration of the short-circuit phase (39) to the duration of the electric arc phase (36) and/or a profile of the welding current (I) are fixed as a function of the set heat input.

10. The welding process according to any one of claims 1 to 9, **characterized in that** the movement frequency (40) is set between 1 Hz and 150 Hz, preferably between 30 Hz and 70 Hz.

11. The welding process according to any one of claims 1 to 10, **characterized in that** the welding parameters are determined and set or controlled as a function of a defined profile of the length of the electric arc (15) and/or the welding voltage (U).

12. A welding installation including a welding apparatus (1), at least one control device (4) including a memory for operation data and/or programs, wherein the control device is designed to perform a cold-metal-transfer welding process, in which the welding process is defined by the cyclic alternation of an electric arc phase and a short-circuit phase, wherein, during the electric arc phase, a welding wire is moved in the direction of a workpiece until contacting the workpiece, subsequently, after the formation of a short-circuit and during the short-circuit phase, the wire transport is reversed and the welding wire is moved away from the workpiece, wherein the welding current and/or the welding voltage are controlled during the electric arc phase in such a manner that the welding wire is melted to form a droplet and that an opening of the short-circuit during the short-circuit phase is prevented via the welding current, a current source (2), a wire feeder (11) for transporting a welding wire (13), a welding torch (10) connectible to the welding apparatus (1), and an input and/or output device (22) including at least two control elements for setting welding parameters, **characterized in that** a control element for directly setting a movement frequency (40) to define the number of electric arc phases (36) and short-circuit phases (39) per second is arranged on the input and/or output device (22), and that the control device (4) is designed to automatically determine and set and control all the other welding parameters required to maintain the preset movement frequency (40) due to stored values and/or by appropriate calculation methods.

13. The welding installation according to claim 12, **characterized in that** the control element for setting the movement frequency (40) is designed as a rotary knob (68), optionally with a scale arranged beside or on the rotary knob (68).

14. The welding installation according to claim 12 or 13, **characterized in that** a control element for setting the material and the material thickness of the workpiece (16) is arranged on the input and/or output device (22).

15. The welding installation according to claim 14, **characterized in that** the control element for setting the material and the material thickness is designed as a rotary knob (69), optionally with a scale provided beside or on the rotary knob (69) and assigned to the material and material thickness.

16. The welding installation according to any one of claims 12 to 15, **characterized in that** a control element for setting a value for the heat input into the workpiece (16) is arranged on the input and/or output device (22).

17. The welding installation according to claim 16, **characterized in that** the control element for setting the value for the heat input into the workpiece (16) is designed as a rotary knob (73), optionally with a scale provided beside or on the rotary knob (73) and assigned to the heat input.

18. The welding installation according to any one of claims 12 to 17, **characterized in that** at least one control element is comprised of a display with an input field.

19. The welding installation according to claim 18, **characterized in that** at least one control element is comprised of a touch screen.

20. The welding installation according to any one of claims 12 to 19, **characterized in that** a remote controller for setting the welding parameters, in particular the movement frequency (40), and the value for the heat input is arranged on the welding torch (10).

## Revendications

1. Procédé de soudure par transfert de métal à froid, dans lequel le processus de soudure est défini par une alternance cyclique d'une phase d'arc électrique (36) et d'une phase de court-circuit (39), un fil de soudure (13) étant déplacé, pendant la phase d'arc électrique (36), en direction de la pièce (16), jusqu'au contact avec la pièce (16), puis pour la formation d'un court-circuit pendant la phase de court-circuit (39), le déplacement du fil est inversé et le fil de soudure (13) est éloigné de la pièce (16), le courant de soudure (I) et/ou la tension de soudure (U) étant régulé pendant la phase d'arc électrique (36) de façon à ce que le fil de soudure (13) fonde et qu'une goutte soit formée et à ce que, pendant la phase de court-circuit (39), une ouverture du court-circuit par le courant de soudure (I) soit empêchée, des paramètres de soudure étant réglés pour la détermination du processus de soudure, **caractérisé en ce qu'**un paramètre de soudure est une fréquence de déplacement (40) du fil de soudure (13) avec laquelle le nombre de phases d'arc électrique (36) et de phases de court-circuit (39) par seconde est défini par un organe de commande et au moins un autre paramètre de soudure est directement réglé et tous les autres paramètres de soudure sont déterminés, réglés et régulés automatiquement par un dispositif de commande (4) pour respecter les fréquences de déplacement (40) réglées sur la base de valeurs enregistrées ou à l'aide de procédés de calcul correspondants et **en ce que** la longueur de l'arc électrique (15) entre le fil de soudure (13) et la pièce (16) pendant la phase d'arc électrique (36) est surveillée et les variations de la longueur de l'arc électrique sont régulés à l'aide des paramètres de soudure, plus particulièrement la vitesse d'avance du fil (V) et le courant de soudure (I), de façon à ce que la phase de court-circuit (39) ait lieu avec la fréquence de déplacement (40) réglée.

2. Procédé de soudure selon la revendication 1, **caractérisé en ce que**, en plus de la fréquence de déplacement (40), l'épaisseur du matériau est réglée.

3. Procédé de soudure selon la revendication 1 ou 2, **caractérisé en ce que**, en plus de la fréquence de déplacement (40), le diamètre du fil de soudure (13) est réglé.

4. Procédé de soudure selon l'une des revendications 1 à 3, **caractérisé en ce que**, en plus de la fréquence de déplacement (40), la vitesse de fusion est réglée.

5. Procédé de soudure selon l'une des revendications 1 à 4, **caractérisé en ce que**, pendant la phase d'arc électrique (36), sur une période définie pour la formation de la goutte (37) sur le fil de soudure (13), des paramètres de soudure, comme le courant de soudure (I) et/ou la vitesse d'avance du fil (V) sont régulés de façon à ce que, pour une vitesse d'avance du fil constante (V), une distance (33) constante entre le fil de soudure (13) et la pièce (16), qui correspondant à la longueur de l'arc électrique (15) entre le fil de soudure (13) et la pièce (16), soit obtenue.

6. Procédé de soudure selon l'une des revendications 1 à 5, **caractérisé en ce que**, pendant la phase d'arc électrique (36), pour l'initialisation de la phase de court-circuit (39), le courant de soudure (I) est diminué de façon à ce que la goutte (37) du fil de soudure (13) soit maintenue dans un état liquéfié sans fusion supplémentaire du fil de soudure (13).

7. Procédé de soudure selon l'une des revendications 1 à 6, **caractérisé en ce que**, pendant la phase d'arc électrique (36), pour l'initialisation de la phase de court-circuit (39), plus particulièrement pendant ou après la diminution du courant de soudure (I), la vitesse d'avance du fil (V) est augmentée afin de réduire la longueur de l'arc électrique (15) entre le fil de soudure (13) et la pièce (16) jusqu'au court-circuit.

8. Procédé de soudure selon l'une des revendications 1 à 7, **caractérisé en ce que**, pendant la phase de court-circuit (39), les paramètres de soudure sont régulés afin de faire varier la durée de la phase de court-circuit (39), de façon à ce que la phase d'arc électrique (36) suivante ait lieu avec la fréquence de déplacement (40) réglée.

9. Procédé de soudure selon l'une des revendications 1 à 8, **caractérisé en ce que**, en plus de la fréquence de déplacement (40), un apport de chaleur à la pièce (16) est réglé et le rapport entre la durée de la phase de court-circuit (39) et la durée de la phase d'arc électrique (36) et/ou un profil du courant de soudure (I) est déterminé en fonction de l'apport de chaleur réglé.

10. Procédé de soudure selon l'une des revendications 1 à 9, **caractérisé en ce que** la fréquence de déplacement (40) est réglée entre 1 Hz et 150 Hz, de préférence entre 30 Hz et 70 Hz.

11. Procédé de soudure selon l'une des revendications 1 à 10, **caractérisé en ce que** les paramètres de soudure sont déterminés et réglés ou régulés en fonction d'un profil défini de la longueur de l'arc électrique (15) ou de la tension de soudure (U).

12. installation de soudure avec un appareil de soudure (1), au moins un dispositif de commande (4) avec une mémoire pour les données de fonctionnement ou des programmes, le dispositif de commande étant conçu pour l'exécution d'un procédé de soudure par transfert de métal à froid, dans lequel le processus de soudure est défini par l'alternance cyclique d'une phase d'arc électrique et d'une phase de court-circuit, un fil de soudure étant déplacé, pendant la phase d'arc électrique, en direction de la pièce jusqu'au contact avec la pièce, puis, après la formation d'un court-circuit, pendant la phase de court-circuit, le déplacement du fil est inversé et le fil de soudure est éloigné de la pièce, le courant de soudure et/ou la tension de soudure étant régulé pendant la phase d'arc électrique de façon à ce que le fil de soudure fonde et qu'une goutte soit formée et à ce que, pendant la phase de court-circuit, une ouverture du court-circuit soit empêchée par le courant de soudure,
une source de courant (2), un dispositif d'avance du fil (11) pour le déplacement d'un fil de soudure (13), un chalumeau de soudure (10) pouvant être raccordé à l'appareil de soudure (1), et un dispositif d'entrée et/ou de sortie (22) avec au moins deux organes de commande pour le réglage de paramètres de soudure, **caractérisé en ce que**, sur le dispositif d'entrée et/ou de sortie (22), est disposé un organe de commande pour le réglage direct d'une fréquence de déplacement (40) avec laquelle le nombre de phases d'arc électrique (36) et de phases de court-circuit (39) par seconde est défini, et
**en ce que** le dispositif de commande (4) est conçu pour la détermination automatique et le réglage et la régulation de tous les autres paramètres de soudure nécessaires sur la base de valeurs enregistrées ou à l'aide de procédés de calcul pour le respect de la fréquence de déplacement (40) réglée.

13. installation de soudure selon la revendication 12, **caractérisée en ce que** l'organe de commande est conçu pour le réglage de la fréquence de déplacement (40) sous la forme d'un bouton rotatif (68), le cas échéant avec une échelle graduée à côté ou sur le bouton rotatif (68).

14. Installation de soudure selon la revendication 12 ou 13, **caractérisée en ce que**, sur le dispositif d'entrée et/ou de sortie (22) est disposé un organe de commande pour le réglage du matériau et de l'épaisseur du matériau de la pièce (16).

15. Installation de soudure selon la revendication 14, **caractérisée en ce que** l'organe de commande pour le réglage du matériau et de l'épaisseur du matériau est conçu comme un bouton rotatif (69), le cas échéant avec une échelle graduée disposée à côté ou sur le bouton rotatif (69) et correspondant au matériau et à l'épaisseur du matériau.

16. Installation de soudure selon l'une des revendications 12 à 15, **caractérisée en ce que**, sur le dispositif d'entrée et/ou de sortie (22), est disposé un organe de commande pour le réglage d'une valeur pour l'apport de chaleur à la pièce (16).

17. installation de soudure selon la revendication 16, **caractérisée en ce que** l'organe de commande pour le réglage de l'apport de chaleur à la pièce (16) est conçu comme un bouton rotatif (73), le cas échéant avec une échelle graduée disposée à côté ou sur le bouton rotatif (73) et correspondant à l'apport de chaleur.

18. installation de soudure selon l'une des revendications 12 à 17, **caractérisée en ce qu'**au moins un organe de commande est constitué d'un affichage avec un champ de saisie.

19. installation de soudure selon la revendication 18, **caractérisée en ce qu'**au moins un organe de commande est conçu comme un écran tactile.

20. installation de soudure selon l'une des revendications 12 à 19, **caractérisée en ce qu'**un régulateur à distance, pour le réglage des paramètres de soudure, plus particulièrement de la fréquence de déplacement (40) et de la valeur pour l'apport de chaleur, est disposé sur le chalumeau de soudure (10).
